(19)

Europäisches
Patentamt
European
Patent Office
Office européen
des brevets

(11) **EP 4 436 172 A1**

(12) **EUROPEAN PATENT APPLICATION**
published in accordance with Art. 153(4) EPC

(43) Date of publication:
**25.09.2024 Bulletin 2024/39**

(21) Application number: **22893316.4**

(22) Date of filing: **15.11.2022**

(51) International Patent Classification (IPC):
*H04N 19/20* (2014.01)      *H04N 19/119* (2014.01)
*H04N 19/176* (2014.01)      *H04N 19/60* (2014.01)
*H04N 19/184* (2014.01)      *G06N 3/08* (2023.01)

(52) Cooperative Patent Classification (CPC):
**G06N 3/08; H04N 19/119; H04N 19/176;**
**H04N 19/184; H04N 19/20; H04N 19/60**

(86) International application number:
**PCT/KR2022/017957**

(87) International publication number:
**WO 2023/085897 (19.05.2023 Gazette 2023/20)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.11.2021   KR 20210156331**

(71) Applicant: **LG Electronics Inc.**
**Yeongdeungpo-gu**
**Seoul 07336 (KR)**

(72) Inventors:
• **GWAK, Donggyu**
**Seoul 06772 (KR)**
• **LIM, Jaehyun**
**Seoul 06772 (KR)**
• **KIM, Chulkeun**
**Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **FEATURE ENCODING/DECODING METHOD AND DEVICE, AND RECORDING MEDIUM STORING BITSTREAM**

(57)    Provided are a feature encoding/decoding method and device, and a computer-readable recording medium generated by the feature encoding method. A feature decoding method, according to the present disclosure, is a feature decoding method performed by a feature decoding device and may comprise the steps of: dividing a current feature channel into feature blocks on the basis of information on division of the current feature channel; and reconstructing a current feature block on the basis of first transform information which is information on a transform of the current feature block from among the feature blocks.

FIG. 12

EP 4 436 172 A1

Processed by Luminess, 75001 PARIS (FR)

**Description**

**Technical Field**

The present disclosure relates to a feature encoding/decoding method and apparatus, and more specifically, to a feature encoding/decoding method and apparatus for compressing feature information using block division and reconstructing it, and a recording medium storing a bitstream generated by the feature encoding method/apparatus of the present disclosure.

**Background Art**

With the development of machine learning technology, demand for image processing-based artificial intelligence services is increasing. In order to effectively process a vast amount of image data required for artificial intelligence services within limited resources, image compression technology optimized for machine task performance is essential. However, existing image compression technology has been developed with the goal of high-resolution, high-quality image processing for human vision, and has the problem of being unsuitable for artificial intelligence services. Accordingly, research and development on new machine-oriented image compression technology suitable for artificial intelligence services is actively underway.

**Disclosure**

**Technical Problem**

An object of the present disclosure is to provide a feature encoding/decoding method and apparatus with improved encoding/decoding efficiency.
Another object of the present disclosure is to provide a feature encoding/decoding method and apparatus in which an output value of a middle layer of a neural network efficiently compresses feature information.
Another object of the present disclosure is to provide a feature encoding/decoding method and apparatus for compressing feature information using block division and reconstructing it.
An object of the present disclosure is to provide a feature encoding/decoding method and apparatus for transmitting information related to the filter.
Another object of the present disclosure is to provide a method or apparatus for transmitting a bitstream generated by a feature encoding method or apparatus.
Another object of the present disclosure is to provide a recording medium storing a bitstream generated by a feature encoding method or apparatus according to the present disclosure.
Another object of the present disclosure is to provide a recording medium storing a bitstream received, decoded and used to reconstruct a feature by a feature decoding apparatus according to the present disclosure.
The technical problems solved by the present disclosure are not limited to the above technical problems and other technical problems which are not described herein will become apparent to those skilled in the art from the following description.

**Technical Solution**

A feature decoding method according to an aspect of the present disclosure is performed by a feature decoding apparatus. The feature decoding method may comprise dividing a current feature channel into feature blocks based on information about division of the current feature channel and reconstructing the current feature block based on first transform information which is information about transform of the current feature block among the feature blocks.
A feature encoding method according to another aspect of the present disclosure is performed by a feature encoding apparatus. The feature encoding method may comprise dividing a current feature channel into feature blocks, transforming a current feature block among the feature blocks, and encoding first transform information, which is information about transform of the current feature block, the transformed current feature block and information about division of the current feature block.
In addition, a recording medium according to another aspect of the present disclosure may store a bitstream generated by the feature encoding apparatus or the feature encoding method of the present disclosure.
In addition, a transmission method according to another aspect of the present disclosure may transmit a bitstream generated by the feature encoding apparatus or the feature encoding method of the present disclosure to a feature decoding apparatus.
The features briefly summarized above with respect to the present disclosure are merely exemplary aspects of the detailed description below of the present disclosure, and do not limit the scope of the present disclosure.

**Advantageous Effects**

According to the present disclosure, it is possible to provide a feature encoding/decoding method and apparatus with improved encoding/decoding efficiency.
Also, according to the present disclosure, since transform is performed in units of feature blocks within a feature channel, the amount of bits during feature encoding and decoding can be reduced.
Also, according to the present disclosure, compression efficiency can be improved by reducing the amount of bits through prediction between feature blocks.
It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically showing a VCM system to which embodiments of the present disclosure are applicable.
FIG. 2 is a diagram schematically showing a VCM pipeline structure to which embodiments of the present disclosure are applicable.
FIG. 3 is a diagram schematically showing an image/video encoder to which embodiments of the present disclosure are applicable.
FIG. 4 is a diagram schematically showing an image/video decoder to which embodiments of the present disclosure are applicable.
FIG. 5 is a flowchart schematically illustrating a feature/feature map encoding procedure to which embodiments of the present disclosure are applicable.
FIG. 6 is a flowchart schematically illustrating a feature/feature map decoding procedure to which embodiments of the present disclosure are applicable.
FIG. 7 is a diagram illustrating an example of a feature extraction and reconstruction method to which embodiments of the present disclosure are applicable.
FIG. 8 is a diagram illustrating an example of a feature extraction method using a feature extraction network.
FIG. 9 is a diagram showing an example of an extracted feature.
FIG. 10 is a diagram showing an example of the size of the extracted feature set.
FIG. 11 is a flowchart illustrating a feature encoding method according to an embodiment of the present disclosure.
FIG. 12 is a flowchart illustrating a feature decoding method according to an embodiment of the present disclosure.
FIG. 13 is a diagram for explaining conventional dimension reduction and reconstruction.
FIG. 14 is a diagram for explaining dimension reduction and reconstruction according to an embodiment of the present disclosure.
FIG. 15 is a diagram for explaining another embodiment of the present disclosure.
FIG. 16 is a diagram for explaining another embodiment of the present disclosure.
FIG. 17 is a flowchart illustrating a feature encoding method according to another embodiment of the present disclosure.
FIG. 18 is a flowchart illustrating a feature decoding method according to another embodiment of the present disclosure.
FIG. 19 is a flowchart illustrating a feature encoding method according to another embodiment of the present disclosure.
FIG. 20 is a flowchart illustrating a feature decoding method according to another embodiment of the present disclosure.
FIG. 21 is a flowchart illustrating a feature encoding method according to another embodiment of the present disclosure.
FIG. 22 is a flowchart illustrating a feature decoding method according to another embodiment of the present disclosure.
FIG. 23 is a flowchart illustrating a feature encoding method according to another embodiment of the present disclosure.
FIG. 24 is a flowchart illustrating a feature decoding method according to another embodiment of the present disclosure.
FIG. 25 is a diagram illustrating an example of data flow in a feature decoding apparatus.

FIG. 26 is a view illustrating an example of a content streaming system to which embodiments of the present disclosure are applicable.

FIG. 27 is a view showing another example of a content streaming system to which embodiments of the present disclosure are applicable.

**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, in case it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

The present disclosure may be applied to a method disclosed in a Versatile Video Coding (WC) standard and/or a Video Coding for Machines (VCM) standard. In addition, the present disclosure may be applied to a method disclosed in an essential video coding (EVC) standard, AOMedia Video 1 (AV1) standard, 2nd generation of audio video coding standard (AVS2), or a next-generation video/image coding standard (e.g., H.267 or H.268, etc.).

This disclosure provides various embodiments related to video/image coding, and, unless otherwise stated, the embodiments may be performed in combination with each other. In the present disclosure, "video" refers to a set of a series of images according to the passage of time. An "image" may be information generated by artificial intelligence (AI). Input information used in the process of performing a series of tasks by AI, information generated during the information processing process, and the output information may be used as images. In the present disclosure, a "picture" generally refers to a unit representing one image in a specific time period, and a slice/tile is a coding unit constituting a part of a picture in encoding. One picture may be composed of one or more slices/tiles. In addition, a slice/tile may include one or more coding tree units (CTUs). The CTU may be partitioned into one or more CUs. A tile is a rectangular region present in a specific tile row and a specific tile column in a picture, and may be composed of a plurality of CTUs. A tile column may be defined as a rectangular region of CTUs, may have the same height as a picture, and may have a width specified by a syntax element signaled from a bitstream part such as a picture parameter set. A tile row may be defined as a rectangular region of CTUs, may have the same width as a picture, and may have a height specified by a syntax element signaled from a bitstream part such as a picture parameter set. A tile scan is a certain continuous ordering method of CTUs partitioning a picture. Here, CTUs may be sequentially ordered according to a CTU raster scan within a tile, and tiles in a picture may be sequentially ordered according to a raster scan order of tiles of the picture. A slice may contain an integer number of complete tiles, or may contain a continuous integer number of complete CTU rows within one tile of one picture. A slice may be exclusively included in a single NAL unit. One picture may be composed of one or more tile groups. One tile group may include one or more tiles. A brick may indicate a rectangular region of CTU rows within a tile in a picture. One tile may include one or more bricks. The brick may refer to a rectangular region of CTU rows in a tile. One tile may be split into a plurality of bricks, and each brick may include one or more CTU rows belonging to a tile. A tile which is not split into a plurality of bricks may also be treated as a brick.

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In an embodiment, especially when applied to VCM, when there is a picture composed of a set of components having different characteristics and meanings, a pixel/pixel value may represent a pixel/pixel value of a component generated through independent information or combination, synthesis, and analysis of each component. For example, in RGB input, only the pixel/pixel value of R may be represented, only the pixel/pixel value of G may be represented, or only the pixel/pixel value of B may be represented. For example, only the pixel/pixel value of a luma component synthesized using the R, G, and B components may be represented. For example, only the pixel/pixel values of images and information extracted through analysis of R, G, and B components from components may be represented.

In the present disclosure, a "unit" may represent a basic unit of image processing. The unit may include at least one of a specific region of the picture and information related to the region. One unit may include one luma block and two chroma (e.g., Cb and Cr) blocks. The unit may be used interchangeably with terms such as "sample array", "block" or "area" in some cases. In a general case, an M×N block may include samples (or sample arrays) or a set (or array) of transform coefficients of M columns and N rows. In an embodiment, In particular, especially when applied to VCM, the unit may represent a basic unit containing information for performing a specific task.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean "a luma block of a current block" unless explicitly stated as a chroma block. The "chroma block of the current block" may be expressed by including an explicit description of a chroma block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

The present disclosure relates to video/image coding for machines (VCM).

VCM refers to a compression technology that encodes/decodes part of a source image/video or information obtained from the source image/video for the purpose of machine vision. In VCM, the encoding/decoding target may be referred to as a feature. The feature may refer to information extracted from the source image/video based on task purpose, requirements, surrounding environment, etc. The feature may have a different information form from the source image/video, and accordingly, the compression method and expression format of the feature may also be different from those of the video source.

VCM may be applied to a variety of application fields. For example, in a surveillance system that recognizes and tracks objects or people, VCM may be used to store or transmit object recognition information. In addition, in intelligent transportation or smart traffic systems, VCM may be used to transmit vehicle location information collected from GPS, sensing information collected from LIDAR, radar, etc., and various vehicle control information to other vehicles or infrastructure. Additionally, in the smart city field, VCM may be used to perform individual tasks of interconnected sensor nodes or devices.

The present disclosure provides various embodiments of feature/feature map coding. Unless otherwise specified, embodiments of the present disclosure may be implemented individually, or may be implemented in combination of two or more.

## Overview of VCM System

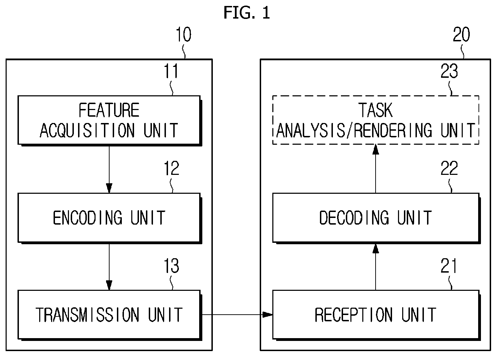

FIG. 1 is a diagram schematically showing a VCM system to which embodiments of the present disclosure are applicable.

Referring to FIG. 1, the VCM system may include an encoding apparatus 10 and a decoding apparatus 20.

The encoding apparatus 10 may compress/encode a feature/feature map extracted from a source image/video to generate a bitstream, and transmit the generated bitstream to the decoding apparatus 20 through a storage medium or network. The encoding apparatus 10 may also be referred to as a feature encoding apparatus. In a VCM system, the feature/feature map may be generated at each hidden layer of a neural network. The size and number of channels of the generated feature map may vary depending on the type of neural network or the location of the hidden layer. In the present disclosure, a feature map may be referred to as a feature set, and a feature or feature map may be referred to as "feature information".

The encoding apparatus 10 may include a feature acquisition unit 11, an encoding unit 12, and a transmission unit 13.

The feature acquisition unit 11 may acquire a feature/feature map for the source image/video. Depending on the embodiment, the feature acquisition unit 11 may acquire a feature/feature map from an external device, for example, a feature extraction network. In this case, the feature acquisition unit 11 performs a feature reception interface function. Alternatively, the feature acquisition unit 11 may acquire a feature/feature map by executing a neural network (e.g., CNN, DNN, etc.) using the source image/video as input. In this case, the feature acquisition unit 11 performs a feature extraction network function.

Depending on the embodiment, the encoding apparatus 10 may further include a source image generator (not shown) for acquiring the source image/video. The source image generator may be implemented with an image sensor, a camera module, etc., and may acquire the source image/video through an image/video capture, synthesis, or generation process. In this case, the generated source image/video may be sent to the feature extraction network and used as input data for extracting the feature/feature map.

The encoding unit 12 may encode the feature/feature map acquired by the feature acquisition unit 11. The encoding unit 12 may perform a series of procedures such as prediction, transform, and quantization to increase encoding efficiency. The encoded data (encoded feature/feature map information) may be output in the form of a bitstream. The bitstream containing the encoded feature/feature map information may be referred to as a VCM bitstream.

The transmission unit 13 may obtain feature/feature map information or data output in the form of a bitstream and forward it to the decoding apparatus 20 or another external object through a digital storage medium or network in the form of a file or streaming. Here, digital storage media may include various storage media such as USB, SD, CD, DVD, Blu-ray, HDD, and SSD. The transmission unit 13 may include elements for generating a media file with a predetermined file format or elements for transmitting data through a broadcasting/communication network. The transmission unit 13 may be provided as a separate transmission device from the encoder 12. In this case, the transmission device may include at least one processor that acquires feature/feature map information or data output in the form of a bitstream and a transmission unit for transmitting it in the form of a file or streaming.

The decoding apparatus 20 may acquire feature/feature map information from the encoding apparatus 10 and reconstruct the feature/feature map based on the acquired information.

The decoding apparatus 20 may include a reception unit 21 and a decoding unit 22.

The reception unit 21 may receive a bitstream from the encoding apparatus 10, acquire feature/feature map information from the received bitstream, and send it to the decoding unit 22.

The decoding unit 22 may decode the feature/feature map based on the acquired feature/feature map information. The decoding unit 22 may perform a series of procedures such as dequantization, inverse transform, and prediction corresponding to the operation of the encoding unit 12 to increase decoding efficiency.

Depending on the embodiment, the decoding apparatus 20 may further include a task analysis/rendering unit 23.

The task analysis/rendering unit 23 may perform task analysis based on the decoded feature/feature map. Additionally, the task analysis/rendering unit 23 may render the decoded feature/feature map into a form suitable for task performance. Various machine (oriented) tasks may be performed based on task analysis results and the rendered features/feature map.

As described above, the VCM system may encode/decode the feature extracted from the source image/video according to user and/or machine requests, task purpose, and surrounding environment, and performs various machine (oriented) tasks based on the decoded feature. The VCM system may be implemented by expanding/redesigning the video/image coding system and may perform various encoding/decoding methods defined in the VCM standard.

### VCM pipeline

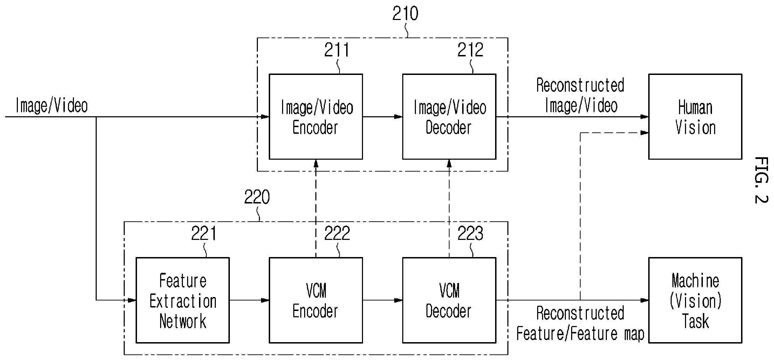

FIG. 2 is a diagram schematically showing a VCM pipeline structure to which embodiments of the present disclosure are applicable.

Referring to FIG. 2, the VCM pipeline 200 may include a first pipeline 210 for encoding/decoding an image/video and a second pipeline 220 for encoding/decoding a feature/feature map. In the present disclosure, the first pipeline 210 may be referred to as a video codec pipeline, and the second pipeline 220 may be referred to as a feature codec pipeline.

The first pipeline 210 may include a first stage 211 for encoding an input image/video and a second stage 212 for decoding the encoded image/video to generate a reconstructed image/video. The reconstructed image/video may be used for human viewing, that is, human vision.

The second pipeline 220 may include a third stage 221 for extracting a feature/feature map from the input image/video, a fourth stage 222 for encoding the extracted feature/feature map, and a fifth stage 223 for decoding the encoded feature/feature map to generate a reconstructed feature/feature map. The reconstructed feature/feature map may be used for a machine (vision) task. Here, the machine (vision) task may refer to a task in which images/videos are consumed by a machine. The machine (vision) task may be applied to service scenarios such as, for example, Surveillance, Intelligent Transportation, Smart City, Intelligent Industry, Intelligent Content, etc. Depending on the embodiment, the reconstructed feature/feature map may be used for human vision.

Depending on the embodiment, the feature/feature map encoded in the fourth stage 222 may be transferred to the first stage 221 and used to encode the image/video. In this case, an additional bitstream may be generated based on the encoded feature/feature map, and the generated additional bitstream may be transferred to the second stage 222 and used to decode the image/video.

Depending on the embodiment, the feature/feature map decoded in the fifth stage 223 may be transferred to the second stage 222 and used to decode the image/video.

FIG. 2 shows a case where the VCM pipeline 200 includes a first pipeline 210 and a second pipeline 220, but this is merely an example and embodiments of the present disclosure are not limited thereto. For example, the VCM pipeline 200 may include only the second pipeline 220, or the second pipeline 220 may be expanded into multiple feature codec pipelines.

Meanwhile, in the first pipeline 210, the first stage 211 may be performed by an image/video encoder, and the second stage 212 may be performed by an image/video decoder. Additionally, in the second pipeline 220, the third stage 221 may be performed by a VCM encoder (or feature/feature map encoder), and the fourth stage 222 may be performed by a VCM decoder (or feature/feature map encoder). Hereinafter, the encoder/decoder structure will be described in detail.

## Encoder

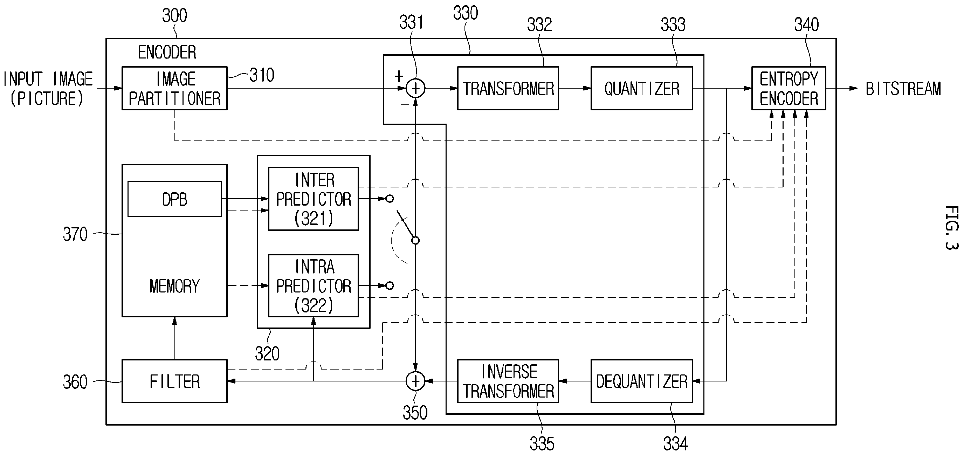

FIG. 3 is a diagram schematically showing an image/video encoder to which embodiments of the present disclosure are applicable.

Referring to FIG. 3, the image/video encoder 300 may further include an image partitioner 310, a predictor 320, a residual processor 330, an entropy encoder 340, and an adder 350, a filter 360, and a memory 370. The predictor 320 may include an inter predictor 321 and an intra predictor 322. The residual processor 330 may include a transformer 332, a quantizer 333, a dequantizer 334, and an inverse transformer 335. The residual processor 330 may further include a subtractor 331. The adder 350 may be referred to as a reconstructor or a reconstructed block generator. The image partitioner 310, the predictor 320, the residual processor 330, the entropy encoder 340, the adder 350, and the filter 360 may be configured by one or more hardware components (e.g., encoder chipset or processor) depending on the embodiment. Additionally, the memory 370 may include a decoded picture buffer (DPB) and may be configured by a digital storage medium. The hardware components described above may further include a memory 370 as an internal/external component.

The image partitioner 310 may partition an input image (or picture, frame) input to the image/video encoder 300 into one or more processing units. As an example, the processing unit may be referred to as a coding unit (CU). The coding unit may be recursively partitioned according to a quad-tree binary-tree ternary-tree (QTBTTT) structure from a coding tree unit (CTU) or largest coding unit (LCU). For example, one coding unit may be partitioned into a plurality of coding units of deeper depth based on a quad tree structure, binary tree structure, and/or ternary structure. In this case, for example, the quad tree structure may be applied first and the binary tree structure and/or ternary structure may be applied later. Alternatively, the binary tree structure may be applied first. The image/video coding procedure according to the present disclosure may be performed based on a final coding unit that is no longer partitioned. In this case, the largest coding unit may be used as the final coding unit based on coding efficiency according to image characteristics, or, if necessary, the coding unit may be recursively partitioned into coding units of deeper depth to use a coding unit with an optimal size as the final coding unit. Here, the coding procedure may include procedures such as prediction, transform, and reconstruction, which will be described later. As another example, the processing unit may further include a prediction unit (PU) or a transform unit (TU). In this case, the prediction unit and the transform unit may each be divided or partitioned from the final coding unit described above. The prediction unit may be a unit of sample prediction, and the transform unit may be a unit for deriving a transform coefficient and/or a unit for deriving a residual signal from the transform coefficient.

In some cases, the unit may be used interchangeably with terms such as block or area. In a general case, an MxN block may represent a set of samples or transform coefficients consisting of M columns and N rows. A sample may generally represent a pixel or a pixel value, and may represent only a pixel/pixel value of a luma component, or only a pixel/pixel value of a chroma component. The sample may be used as a term corresponding to pixel or pel.

The image/video encoder 300 may generate a residual signal (residual block, residual sample array) by subtracting a prediction signal (predicted block, prediction sample array) output from the inter predictor 321 or the intra predictor 322 from the input image signal (original block, original sample array) and transmit the generated residual signal to the transformer 332. In this case, as shown, the unit that subtracts the prediction signal (prediction block, prediction sample array) from the input image signal (original block, original sample array) within the image/video encoder 300 may be referred to as the subtractor 331. The predictor may perform prediction on a processing target block (hereinafter referred to as a current block) and generate a predicted block including prediction samples for the current block. The predictor may determine whether intra prediction or inter prediction is applied in current block or CU units. The predictor may generate various information related to prediction, such as prediction mode information, and transfer it to the entropy encoder 340. Information about prediction may be encoded in the entropy encoder 340 and output in the form of a bitstream.

The intra predictor 322 may predict the current block by referring to the samples in the current picture. At this time, the referenced samples may be located in the neighbor of the current block or may be located away from the current block, depending on the prediction mode. In intra prediction, the prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on settings. The intra predictor 322 may determine the prediction mode applied to the current block by using a prediction mode applied to a neighboring block.

The inter predictor 321 may derive a predicted block for the current block based on a reference block (reference sample array) specified by a motion vector on a reference picture. In this case, in order to reduce the amount of motion information transmitted in the inter prediction mode, the motion information may be predicted in block, subblock, or sample units based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like, and the reference picture including the temporal neighboring block may be called a collocated picture (colPic). For example, the inter predictor 321 may construct a motion information candidate list based on neighboring blocks and generate information indicating which candidate is used to derive a motion vector and/or reference picture index of the current block. Inter prediction may be performed based on various prediction modes, and, for example, in the case of a skip mode and a merge mode, the inter predictor 321may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and a motion vector difference may be signaled to indicate the motion vector of the current block.

The predictor 320 may generate a prediction signal based on various prediction methods. For example, the predictor may not only apply intra prediction or inter prediction but also simultaneously apply both intra prediction and inter prediction, for prediction of one block. This may be called combined inter and intra prediction (CIIP). In addition, the predictor may be based on an intra block copy (IBC) prediction mode or a palette mode for prediction of the block. The IBC prediction mode or the palette mode may be used for content image/video coding of a game or the like, for example, screen content coding (SCC). IBC basically performs prediction within the current picture, but may be performed similarly to inter prediction in that a reference block is derived within the current picture. That is, IBC may use at least one of the inter prediction techniques described in the present disclosure. The palette mode may be regarded as an example of intra coding or intra prediction. When the palette mode is applied, the sample values within the picture may be signaled based on information about a palette table and a palette index.

The prediction signal generated by the predictor 320 may be used to generate a reconstructed signal or to generate a residual signal. The transformer 332 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT refers to transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to non-square blocks having a variable size.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may reorder quantized transform coefficients in a block form into a one-dimensional vector form based on a coefficient scan order and generate information on the quantized transform coefficients based on the quantized transform coefficients in the one-dimensional vector form. The entropy encoder 340 may perform various encoding methods such as, for example, exponential Golomb, context-adaptive variable length coding (CAVLC), context-adaptive binary arithmetic coding (CABAC), and the like. The entropy encoder 340 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. In addition, the video/image information may further include a method of generating and using encoded information, a purpose, and the like. In the present disclosure, information and/or syntax elements transferred/signaled from the image/video encoder to the image/video decoder may be included in image/video information. The image/video information may be encoded through the above-described encoding procedure and included in the bitstream. The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 340 and/or a storage unit (not shown) storing the signal may be configured as internal/external element of the image/video encoder 300, or the transmitter may be included in the entropy encoder 340.

The quantized transform coefficients output from the quantizer 130 may be used to generate a prediction signal. For example, the residual signal (residual block or residual samples) may be reconstructed by applying dequantization and inverse transform to the quantized transform coefficients through the dequantizer 334 and the inverse transformer 335. The adder 350 adds the reconstructed residual signal to the prediction signal output from the inter predictor 321 or the intra predictor 322 to generate a reconstructed signal (reconstructed picture, reconstructed block, reconstructed sample array). In a case where there is no residual for the processing target block, such as a case where the skip mode is applied, the predicted block may be used as the reconstructed block. The adder 350 may be called a reconstructor or a reconstructed block generator. The generated reconstructed signal may be used for intra prediction of a next processing target block in the current picture and may be used for inter prediction of a next picture through filtering as described below.

Meanwhile, luma mapping with chroma scaling (LMCS) is applicable in a picture encoding and/or reconstruction process.

The filter 360 may improve subjective/objective image quality by applying filtering to the reconstructed signal. For example, the filter 360 may generate a modified reconstructed picture by applying various filtering methods to the reconstructed picture, and store the modified reconstructed picture in the memory 370, specifically, a DPB of the memory 370. The various filtering methods may include, for example, deblocking filtering, a sample adaptive offset, an adaptive loop filter, a bilateral filter, and the like. The filter 360 may generate various information related to filtering and transmit the generated information to the entropy encoder 190. The information related to filtering may be encoded by the entropy encoder 340 and output in the form of a bitstream.

The modified reconstructed picture transmitted to the memory 370 may be used as the reference picture in the inter predictor 321. Through this, prediction mismatch between the encoder and the decoder may be avoided and encoding efficiency may be improved.

The DPB of the memory 370 may store the modified reconstructed picture for use as a reference picture in the inter predictor 321. The memory 370 may store the motion information of the block from which the motion information in the current picture is derived (or encoded) and/or the motion information of the blocks in the already reconstructed picture. The stored motion information may be transferred to the inter predictor 321 for use as the motion information of the spatial neighboring block or the motion information of the temporal neighboring block. The memory 370 may store reconstructed samples of reconstructed blocks in the current picture and may transfer the stored reconstructed samples to the intra predictor 322.

Meanwhile, the VCM encoder (or feature/feature map encoder) basically performs a series of procedures such as prediction, transform, and quantization to encode the feature/feature map and thus may basically have the same/similar structure as the image/video encoder 300 described with reference to FIG. 3. However, the VCM encoder is different from the image/video encoder 300 in that the feature/feature map is an encoding target, and thus may be different from the image/video encoder 300 in the name of each unit (or component) (e.g., image partitioner 310, etc.) and its specific operation content. The specific operation of the VCM encoder will be described in detail later.

## Decoder

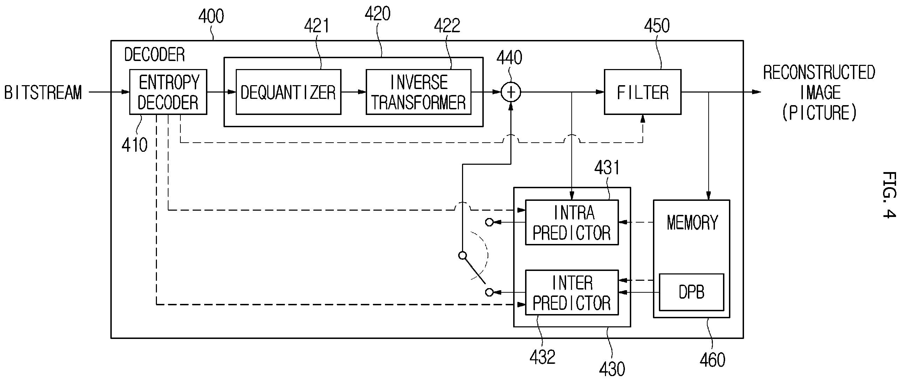

FIG. 4 is a diagram schematically showing an image/video decoder to which embodiments of the present disclosure are applicable.

Referring to FIG. 4, the image/video decoder 400 may include an entropy decoder 410, a residual processor 420, a predictor 430, an adder 440, a filter 450 and a memory 460. The predictor 430 may include an inter predictor 431 and an intra predictor 432. The residual processor 420 may include a dequantizer 421 and an inverse transformer 422. The entropy decoder 410, the residual processor 420, the predictor 430, the adder 440, and the filter 450 may be configured by one hardware component (e.g., a decoder chipset or processor) depending on the embodiment. Additionally, the memory 460 may include a decoded picture buffer (DPB) and may be configured by a digital storage medium. The hardware component may further include the memory 460 as an internal/external component.

When a bitstream containing video/image information is input, the image/video decoder 400 may reconstruct an image/video in correspondence with the process in which the image/video information is processed in the image/video encoder 300 of FIG. 3. For example, the image/video decoder 400 may derive units/blocks based on block partition-related information acquired from the bitstream. The image/video decoder 400 may perform decoding using a processing unit applied in the image/video encoder. Accordingly, the processing unit of decoding may, for example, be a coding unit, and the coding unit may be partitioned from a coding tree unit or a largest coding unit according to a quad tree structure, a binary tree structure and/or a ternary tree structure. One or more transform units may be derived from the coding unit. In addition, the reconstructed image signal decoded and output through the image/video decoder 400 may be played through a playback device.

The image/video decoder 400 may receive a signal output from the encoder of FIG. 3 in the form of a bitstream, and decode the received signal through the entropy decoder 410. For example, the entropy decoder 410 may parse the bitstream to derive information (e.g., image/video information) necessary for image reconstruction (or picture reconstruction). The image/video information may further include information about various parameter sets, such as an adaptation parameter set (APS), picture parameter set (PPS), sequence parameter set (SPS), or video parameter set (VPS). Additionally, image/video information may further include general constraint information. Additionally, the image/video information may include a method of generating and using decoded information, a purpose, and the like. The image/video decoder 400 may decode the picture further based on information about the parameter set and/or general constraint information. The signaled/received information and/or syntax elements may be decoded and acquired from the bitstream through a decoding procedure. For example, the entropy decoder 410 may decode information in the bitstream based on a coding method such as exponential Golomb coding, CAVLC, or CABAC, and output the values of syntax elements necessary for image reconstruction and quantized values of transform coefficients related to residuals. More specifically, in the CABAC entropy decoding method, a bin corresponding to each syntax element may be received in the bitstream, a context model may be determined using decoding target syntax element information and decoding information of neighboring and decoding target blocks or information on the symbol/bin decoded in the previous step, the occurrence probability of the bin may be predicted according to the determined context model, and arithmetic decoding of the bin may be performed to generate a symbol corresponding to the value of each syntax element. At this time, the CABAC entropy decoding method may update the context model using the information on the decoded symbol/bin for the context model of the next symbol/bin after determining the context model. Information about prediction among the information decoded in the entropy decoder 410 is provided to the predictor (inter predictor 432 and intra predictor 431), and a residual value obtained by performing entropy decoding in the entropy decoder 410, that is, quantized transform coefficients and related parameter information may be input to the residual processor 420. The residual processor 420 may derive a residual signal (residual block, residual samples, residual sample array). Additionally, information about filtering among the information decoded by the entropy decoder 410 may be provided to the filter 450. Meanwhile, a receiver (not shown) that receives a signal output from the image/video encoder may be further configured as an internal/external element of the image/video decoder 400, or the receiver may be a component of the entropy decoder 410. Meanwhile, the image/video decoder according to the present disclosure may be called an image/video decoding apparatus, and the image/video decoder may be divided into an information decoder (image/video information decoder) and a sample decoder (image/video sample decoder). In this case, the information decoder may include an entropy decoder 410, and the sample decoder may include at least one of a dequantizer 321, an inverse transformer 322, an adder 440, a filter 450, and a memory 460, an inter predictor 432 or an intra predictor 431.

The dequantizer 421 may dequantize the quantized transform coefficients and output transform coefficients. The dequantizer 421 may rearrange the quantized transform coefficients into a two-dimensional block form. In this case, rearranging may be performed based on the coefficient scan order performed in the image/video encoder. The dequantizer 321 may perform dequantization on quantized transform coefficients using quantization parameters (e.g., quantization step size information) and acquire transform coefficients.

The inverse transformer 422 inversely transforms the transform coefficients to acquire a residual signal (residual block, residual sample array).

The predictor 430 may perform prediction on the current block and generate a predicted block including prediction samples for the current block. The predictor may determine whether intra prediction or inter prediction is applied to the current block based on information about prediction output from the entropy decoder 410, and may determine a specific intra/inter prediction mode.

The predictor 420 may generate a prediction signal based on various prediction methods. For example, the predictor may not only apply intra prediction or inter prediction for prediction of one block, but also may apply intra prediction and inter prediction simultaneously. This may be called combined inter and intra prediction (CIIP). Additionally, the predictor may be based on an intra block copy (IBC) prediction mode or a palette mode for prediction of a block. The IBC prediction mode or palette mode may be used, for example, for image/video coding of content such as games, such as screen content coding (SCC). In IBC, prediction is basically performed within the current picture, but may be performed similarly to inter prediction in that a reference block is derived within the current picture. That is, IBC may use at least one of the inter prediction techniques described in this document. The palette mode may be viewed as an example of intra coding or intra prediction. When the palette mode is applied, information about the palette table and palette index may be included and signaled in the image/video information.

The intra predictor 431 may predict the current block by referencing samples in the current picture. The referenced samples may be located in the neighbor of the current block, or may be located away from the current block, depending on the prediction mode. In intra prediction, prediction modes may include a plurality of non-directional modes and a plurality of directional modes. The intra predictor 431 may determine the prediction mode applied to the current block using the prediction mode applied to the neighboring block.

The inter predictor 432 may derive a predicted block for the current block based on a reference block (reference sample array) specified by a motion vector in the reference picture. At this time, in order to reduce the amount of motion information transmitted in the inter prediction mode, motion information may be predicted in block, subblock, or sample units based on the correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, neighboring blocks may include a spatial neighboring block present in the current picture and a temporal neighboring block present in the reference picture. For example, the inter predictor 432 may construct a motion information candidate list based on neighboring blocks and derive a motion vector and/or reference picture index of the current block based on received candidate selection information. Inter prediction may be performed based on various prediction modes, and information about prediction may include information indicating the mode of inter prediction for the current block.

The adder 440 may generate a reconstructed signal (reconstructed picture, reconstructed block, reconstructed sample array) by adding the acquired residual signal to a prediction signal (predicted block, prediction sample array) output from the predictor (including the inter predictor 432 and/or the intra predictor 431). If there is no residual for a processing target block, such as when skip mode is applied, the predicted block may be used as a reconstruction block.

The adder 440 may be called a reconstructor or a reconstruction block generator. The generated reconstructed signal may be used for intra prediction of a next processing target block in the current picture, may be output after filtering as described later, or may be used for inter prediction of a next picture.

Meanwhile, luma mapping with chroma scaling (LMCS) is applicable in a picture decoding process.

The filter 450 can improve subjective/objective image quality by applying filtering to the reconstructed signal. For example, the filter 450 may generate a modified reconstructed picture by applying various filtering methods to the reconstructed picture, and transmit the modified reconstructed picture in the memory 460, specifically the DPB of the memory 460. Various filtering methods may include, for example, deblocking filtering, sample adaptive offset, adaptive loop filter, bilateral filter, etc.

The (modified) reconstructed picture stored in the DPB of the memory 460 may be used as a reference picture in the inter predictor 432. The memory 460 may store motion information of a block from which motion information in the current picture is derived (or decoded) and/or motion information of blocks in an already reconstructed picture. The stored motion information may be transferred to the inter predictor 432 for use as motion information of spatial neighboring blocks or motion information of temporal neighboring blocks. The memory 460 may store reconstructed samples of reconstructed blocks in the current picture and transfer them to the intra predictor 431.

Meanwhile, the VCM decoder (or feature/feature map decoder) performs a series of procedures such as prediction, inverse transform, and dequantization to decode the feature/feature map, and may basically have the same/similar structure as the image/video decoder 400 described above with reference to FIG. 4. However, the VCM decoder is different from the image/video decoder 400 in that the feature/feature map is a decoding target, and may be different from the image/video decoder 400 in the name (e.g., DPB, etc.) of each unit (or component) and its specific operation. The operation of the VCM decoder may correspond to the operation of the VCM encoder, and the specific operation will be described in detail later.

## Feature/feature map encoding procedure

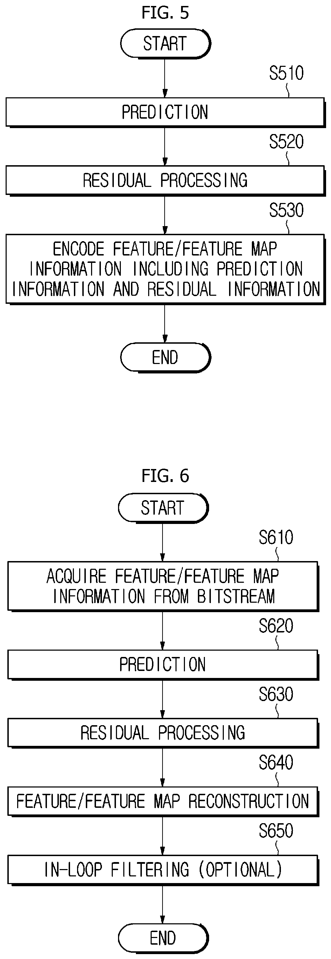

FIG. 5 is a flowchart schematically illustrating a feature/feature map encoding procedure to which embodiments of the present disclosure are applicable.

Referring to FIG. 5, the feature/feature map encoding procedure may include a prediction procedure (S510), a residual processing procedure (S520), and an information encoding procedure (S530).

The prediction procedure (S510) may be performed by the predictor 320 described above with reference to FIG. 3.

Specifically, the intra predictor 322 may predict a current block (that is, a set of current encoding target feature elements) by referencing feature elements in a current feature/feature map. Intra prediction may be performed based on the spatial similarity of feature elements constituting the feature/feature map. For example, feature elements included in the same region of interest (RoI) within an image/video may be estimated to have similar data distribution characteristics. Accordingly, the intra predictor 322 may predict the current block by referencing the already reconstructed feature elements within the region of interest including the current block. At this time, the referenced feature elements may be located adjacent to the current block or may be located away from the current block depending on the prediction mode. Intra prediction modes for feature/feature map encoding may include a plurality of non-directional prediction modes and a plurality of directional prediction modes. The non-directional prediction modes may include, for example, prediction modes corresponding to the DC mode and planar mode of the image/video encoding procedure. Additionally, the directional modes may include prediction modes corresponding to, for example, 33 directional modes or 65 directional modes of an image/video encoding procedure. However, this is an example, and the type and number of intra prediction modes may be set/changed in various ways depending on the embodiment.

The inter predictor 321 may predict the current block based on a reference block (i.e., a set of referenced feature elements) specified by motion information on the reference feature/feature map. Inter prediction may be performed based on the temporal similarity of feature elements constituting the feature/feature map. For example, temporally consecutive features may have similar data distribution characteristics. Accordingly, the inter predictor 321 may predict the current block by referencing the already reconstructed feature elements of features temporally adjacent to the current feature. At this time, motion information for specifying the referenced feature elements may include a motion vector and a reference feature/feature map index. The motion information may further include information about an inter prediction direction (e.g., L0 prediction, L1 prediction, Bi prediction, etc.). In the case of inter prediction, neighboring blocks may include spatial neighboring blocks present within the current feature/feature map and temporal neighboring blocks present within the reference feature/feature map. A reference feature/feature map including a reference block and a reference feature/feature map including a temporal neighboring block may be the same or different. The temporal neighboring block may be referred to as a collocated reference block, etc., and a reference feature/feature map including a temporal neighboring block may be referred to as a collocated feature/feature map. The inter predictor 321 may construct a motion information candidate list based on neighboring blocks and generate information indicating which candidate is used to derive the motion vector and/or reference feature/feature map index of the current block. Inter prediction may be performed based on various prediction modes. For example, in the case of the skip mode and the merge mode, the inter predictor 321 may use motion information of the neighboring block as motion information of the current block. In the case of the skip mode, unlike the merge mode, the residual signal may not be transmitted. In the case of the motion vector prediction (MVP) mode, the motion vector of the neighboring block is used as a motion vector predictor, and the motion vector of the current block may be indicated by signaling the motion vector difference. The predictor 320 may generate a prediction signal based on various prediction methods in addition to intra prediction and inter prediction described above.

The prediction signal generated by the predictor 320 may be used to generate a residual signal (residual block, residual feature elements) (S520). The residual processing procedure (S520) may be performed by the residual processor 330 described above with reference to FIG. 3. In addition, (quantized) transform coefficients may be generated through a transform and/or quantization procedure for the residual signal, and the entropy encoder 340 may encode information about the (quantized) transform coefficients in the bitstream as residual information (S530). Additionally, the entropy encoder 340 may encode information necessary for feature/feature map reconstruction, such as prediction information (e.g., prediction mode information, motion information, etc.), in the bitstream, in addition to the residual information.

Meanwhile, the feature/feature map encoding procedure may further include not only a procedure (S530) for encoding information for feature/feature map reconstruction (e.g., prediction information, residual information, partitioning information, etc.) and outputting it in the form of a bitstream, a procedure for generating a reconstructed feature/feature map for the current feature/feature map and a procedure (optional) for applying in-loop filtering to the reconstructed feature/feature map.

The VCM encoder may derive (modified) residual feature(s) from the quantized transform coefficient(s) through dequantization and inverse transform, and generate a reconstructed feature/feature map based on the predicted feature(s) and (modified) residual feature(s) that are the output of step S510. The reconstructed feature/feature map generated in this way may be the same as the reconstructed feature/feature map generated in the VCM decoder. When an in-loop filtering procedure is performed on the reconstructed feature/feature map, a modified reconstructed feature/feature map may be generated through the in-loop filtering procedure on the reconstructed feature/feature map. The modified reconstructed feature/feature map may be stored in a decoded feature buffer (DFB) or memory and used as a reference feature/feature map in the feature/feature map prediction procedure later. Additionally, (in-loop) filtering-related information (parameters) may be encoded and output in the form of a bitstream. Through the in-loop filtering procedure, noise that may occur during feature/feature map coding may be removed, and feature/feature map-based task performance may be improved. In addition, by performing an in-loop filtering procedure at both the encoder stage and the decoder stage, the identity of the prediction result can be guaranteed, the reliability of feature/feature map coding can be improved, and the amount of data transmission for feature/feature map coding can be reduced.

**Feature/feature map decoding procedure**

FIG. 6 is a flowchart schematically illustrating a feature/feature map decoding procedure to which embodiments of the present disclosure are applicable.

Referring to FIG. 6, the feature/feature map decoding procedure may include an image/video information acquisition procedure (S610), a feature/feature map reconstruction procedure (S620 to S640), and an in-loop filtering procedure for a reconstructed feature/feature map (S650). The feature/feature map reconstruction procedure may be performed on the prediction signal and residual signal acquired through inter/intra prediction (S620) and residual processing (S630), dequantization and inverse transform process for quantized transform coefficients described in the present disclosure. A modified reconstructed feature/feature map may be generated through an in-loop filtering procedure for the reconstructed feature/feature map, and the modified reconstructed feature/feature map may be output as a decoded feature/feature map. The decoded feature/feature map may be stored in a decoded feature buffer (DFB) or memory and used as a reference feature/feature map in the inter prediction procedure when decoding the feature/feature map. In some cases, the above-described in-loop filtering procedure may be omitted. In this case, the reconstructed feature/feature map may be output without change as a decoded feature/feature map, and stored in the decoded feature buffer (DFB) or memory, and then be used as a reference feature/feature map in the inter prediction procedure when decoding the feature/feature map.

**Feature extraction method and data distribution characteristics**

Embodiments of the present disclosure propose a method of generating a bitstream related to a prediction process necessary to compress an activation (feature) map generated in a hidden layer of a deep neural network.

Input data input to the deep neural network goes through an operation process of several hidden layers, and the operation results of each hidden layer are output as a feature/feature map having various sizes and channel numbers depending on the type of deep neural network being used and the location of the hidden layer within the deep neural network.

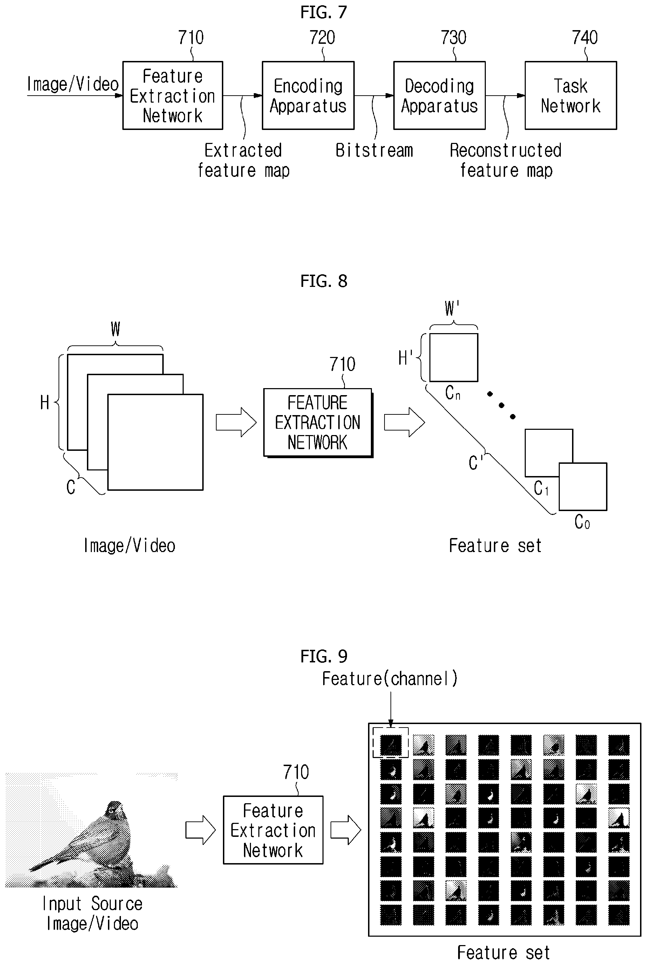

FIG. 7 is a diagram illustrating an example of a feature extraction and reconstruction method to which embodiments of the present disclosure are applicable.

Referring to FIG. 7, a feature extraction network 710 may extract a middle layer activation (feature) map of a deep neural network from a source image/video and output the extracted feature map. The feature extraction network 710 may be a set of successive hidden layers from input of the deep neural network.

An encoding apparatus 720 may compress the output feature map and output it in the form of a bitstream, and a decoding apparatus 730 may reconstruct the (compressed) feature map from the output bitstream. The encoding apparatus 720 may correspond to the encoding unit 12 of FIG. 1, and the decoding apparatus 720 may correspond to the decoding unit 22 of FIG. 1. A task network 740 may perform a task based on the reconstructed feature map.

FIG. 8 is a diagram showing an example of input and output of the feature extraction network 710.

The width, height and channel size of an input source (video source) are W, H, and C, respectively, and the width, height and channel size of a feature set of an output value are W', H', and C'. For example, if the input source is RGB, C may be 3.

C' of the output value refers to the number of features that make up the feature set, and the value may vary depending on the applied feature extraction method. Generally, C' has a value larger than the number of channels C of the input source.

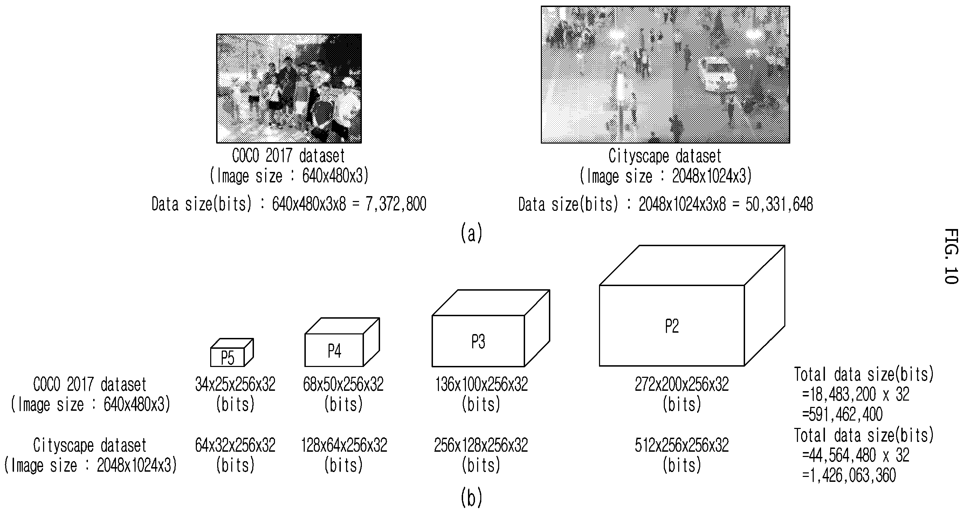

FIG. 9 is a diagram showing an example of an extracted feature, and FIG. 10 is a diagram showing an example of the size of the extracted feature set.

The left side of FIG. 9 shows a video source (Image/Video), and the right side of FIG. 9 shows a feature map with 64 features. Referring to FIG. 9, it can be seen that 64 features (channels) are extracted from one video source. Additionally, it can be seen that the width and height of each feature are also different from the width and height of the video source. In general, the size (width × height) of a single feature is smaller than that of the video source, but the number of channels of the feature is greater than the number of channels of the video source. Therefore, the sum of the sizes of all features may be greater than the size of the video source.

(a) of FIG. 10 shows the size of a video source (Image/Video), and (b) of FIG. 10 shows a feature map with the number of channels being 256. Referring to FIG. 10, it can be seen that although the size of an individual feature is smaller than that of a video source, the total size (size of the feature map) is larger than that of the video source due to an increase in the number of channels.

In order to efficiently compress a feature or a feature map, there is a need for a method of efficiently reducing the number of channels in feature data that exceeds the number of channels in an original image. To this end, the present disclosure proposes 1) a method of dividing feature data with multiple channels into variable block units and reducing them into a small number of separate channels through a separate dimension reduction transform method, 2) a method of performing intra prediction on dimensionally reduced blocks through dimension reduction transform and inverse transform, and 3) a method of reconstructing a plurality of original channels using a residual signal and a prediction result.

Hereinafter, the feature that makes up the feature set will be referred to as "feature channel," the dimension reduction method will be referred to as "transform" or "transform method," and a block will be referred to as "feature block."

## Embodiment 1

Embodiment 1 is a method of dividing high-dimensional feature data with multiple channels into variable block (feature block) units and transforming the divided feature blocks into low-dimensional ones for each feature block using a dimension reduction method (transform method).

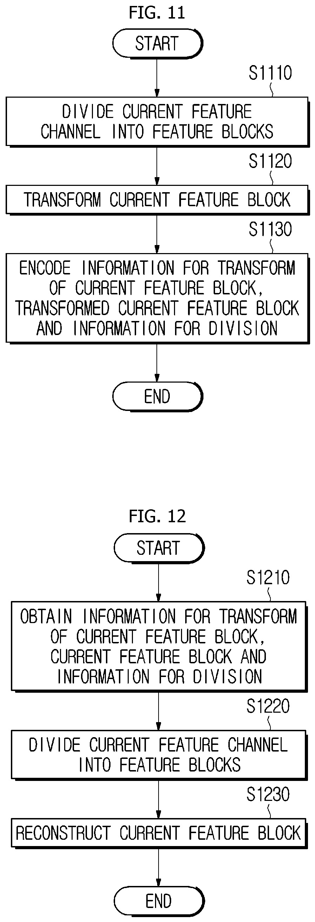

FIG. 11 is a flowchart showing a feature encoding method according to Embodiment 1, and FIG. 12 is a flowchart showing a feature decoding method according to Embodiment 2.

Referring to FIG. 11, the feature encoding apparatus 10 may divide feature channels constituting feature data into feature blocks (S1110). That is, the feature encoding apparatus 10 may divide a current feature channel into feature blocks.

The feature blocks may have the same or different sizes. Additionally, some of the feature blocks may have the same size, and others may have different sizes.

The feature encoding apparatus 20 may transform the feature blocks using a transform method (S1120). That is, the current feature block may be dimensionally reduced to a low- dimensional one through a transform method.

Transform methods applied to the feature blocks may be the same or different for each feature block. For example, the same transform method may be applied to some of the feature blocks, and different transform methods may be applied to the remaining feature blocks.

The feature encoding apparatus 20 may encode information about transform of the feature block, the transformed feature block, and information about division of the feature block (S1130). That is, information about the transform of the current feature block (first transform information), the transformed current feature block, and information about division of the current feature channel may be encoded.

Referring to FIG. 12, the feature decoding apparatus 20 may obtain information about transform of the feature block, the transformed feature block, and information about division of the feature block from a bitstream (S1210). That is, the information about transform of the current feature block, the transformed current feature block, and information about the division of the current feature channel may be obtained from the bitstream.

The feature decoding apparatus 20 may divide the feature channels into feature blocks based on information about division (S1220). That is, the current feature channel may be divided into feature blocks including the current feature block based on the information about division.

The feature blocks may have the same or different sizes. Additionally, some of the feature blocks may have the same size, and others may have different sizes.

The feature decoding apparatus 20 may reconstruct the feature blocks by inversely transforming the feature blocks based on the information about transform (S1230). That is, the current feature block may inversely transformed based on first transform information, thereby being reconstructed.

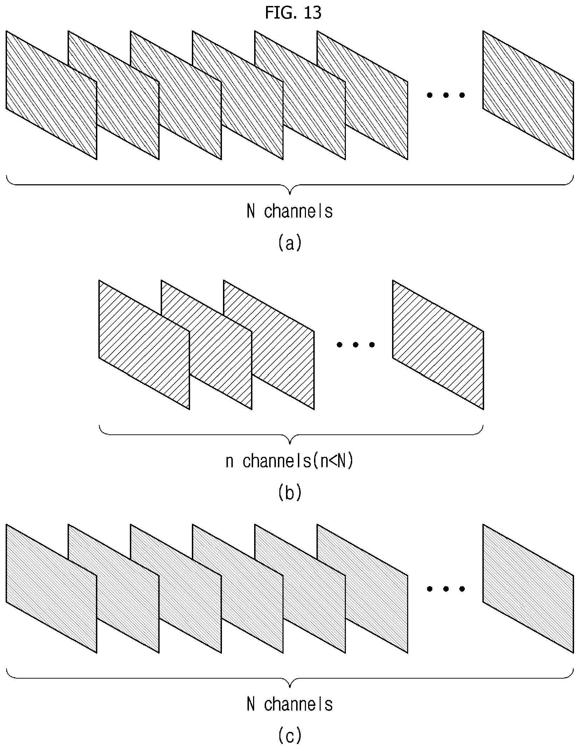

FIG. 13 is a diagram for explaining conventional dimension reduction and reconstruction.

FIG. 13(a) shows feature data consisting of N dimensions. When the feature channels included in the feature data are reduced to low-dimensional ones through a transform method such as principal component analysis (PCA), the dimensionally reduced feature data consisting of n (n<N) number of feature channels may be obtained, as shown in FIG. 13(b).

The dimensionally reduced feature data may be signaled without change, or may be encoded in another manner to reduce the amount of data during signaling and storage. When the dimensionally reduced feature data is encoded, it goes through a decoding process again before reconstructing the dimension to the original one, and is then reconstructed to the original dimension through a dimension reconstruction transform method, as shown in FIG. 13(c).

When the number of feature channels in the feature data is reduced using the same dimension reduction transform method, the error between the reconstructed feature data and the original feature data decreases as the number n of feature channels in the reduced dimension increases.

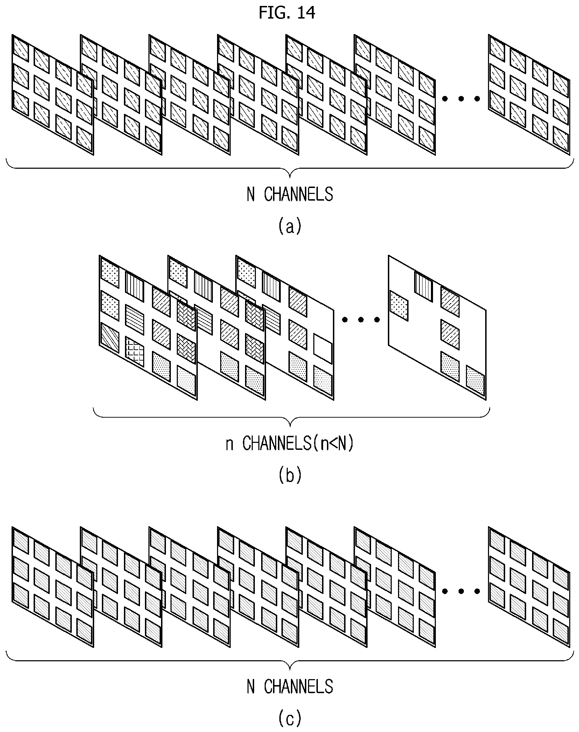

FIG. 14 is a diagram for explaining dimension reduction and reconstruction according to Embodiment 1.

In general, a correlation between feature channels within a section where feature data is divided into feature blocks becomes larger than a correlation between feature channels in the entire feature data. Therefore, when applying a (separate) transform method or (separate) reduction dimension in feature block units, feature data may be reduced to a smaller number of feature channels while maintaining the same quality as conventional dimension reduction and reconstruction. Reducing feature data to a smaller number of feature channels means that the amount of information to be encoded is reduced, which can reduce the amount of bits during encoding.

FIG. 14(a) shows an example of dividing original feature data into feature block units with the same size, and FIG. 14(b) shows a result of applying a different dimension reduction transform method for each feature block or separately taking the number of dimensions after reduction. FIG. 14(c) shows an example of reconstruction into feature data with N feature channels like the original by applying a different dimension reconstruction method to dimensionally reduced feature data for each feature block.

It can be seen that as a result of transform in feature block units, each feature block is transformed to have a maximum of n (n<N) feature channels, and some feature blocks have values only in front (left side in FIG. 14) feature channels and do not have values in subsequent feature channels. This indicates that the number of channels after dimension reduction transform is less than n in the feature block, and that the feature blocks have a similar level of error as other feature blocks reduced to n channels even with fewer channels than n.

## Embodiment 2

### Embodiment 2-1

Embodiment 2-1 is a method of reducing the amount of bits required for encoding and signaling information about transform.

For inverse transform (dimension reconstruction transform) of feature channels, additional information is required in addition to the dimension-reduction-transformed feature data result (transformed feature channel). Here, the additional information may be information about transform of feature blocks, or may be first transform information, which is information about transform of a current feature block.

Taking PCA, a method of dimension reduction transform, as an example, in addition to the feature data of a feature channel reduced after dimension reduction, information about a mean and principal components must be additionally signaled to reconstruct original feature data. This additional information may increase the amount of bits during encoding. Additionally, when the transform method is applied in feature block units, a separate mean and principal components must be transmitted for each feature block, so the amount of bits can be further increased compared to the conventional case.

Embodiment 2-1 is a method of reducing the amount of additional information that causes an increase in amount of bits during encoding and is a method of encoding and signaling only a corresponding index in a predefined table instead of encoding and signaling additional information for each feature block.

The feature encoding apparatus 10 may encode an index (information about transform) in step S1130, and the feature decoding apparatus 20 may obtain the index in step S1210. The index may indicate a transform mode applied to the corresponding feature block among at least one transform mode (candidate transform mode) included in the table. That is, the index may indicate the transform mode applied to the current feature block among at least one candidate transform mode.

The table may be predefined in the feature encoding apparatus 10 and the feature decoding apparatus 20. An example of a table when the PCA dimension reduction method is used as the transform method is shown in Table 1.

[Table 1]

| Index | Mean | Principal Components | original number of channels | reduced number of channels |
|---|---|---|---|---|
| 0 | $m_0$ | $C_0$ | N | $n_0$ |
| 1 | $m_1$ | $C_1$ | N | $n_1$ |
| 2 | $m_2$ | $C_2$ | N | $n_2$ |
| ... | ... | ... | ... | ... |
| M-1 | $m_{M-1}$ | $C_{M-1}$ | N | $n_{N-1}$ |

As shown in Table 1, a combination of M means and principal components is defined identically in the feature encoding apparatus 10 and the feature decoding apparatus 20, and, when the feature encoding apparatus 10 signals only the index of "mean, principal components" in the table along with the dimensionally reduced feature data of the current feature block, the feature decoding apparatus 20 may perform dimension reconstruction transform suitable for the current feature block.

As an example, if an arbitrary block in the original feature data consisting of N feature channels is dimensionally reduced and transformed using $m_0$ and $c_0$, a dimensionally reduced value $\hat{x}$ with the number of feature channels being $n_0$ may be obtained by performing Equation 1 below on arbitrary vector data x in the feature block.

[Equation 1]

$$\hat{x} = C_0(x - m_0)$$

Thereafter, when index 0 used in transform is signaled along with the dimensionally reduced vector $\hat{x}$, the feature decoding apparatus 20 may reconstruct (inversely transform) $n_0$ feature channels back to N feature channels through Equation 2 by referring to the value ($m_0$, $c_0$) of index 0 in the same table as the feature encoding apparatus 10.

[Equation 2]

$$x = C_0^{T}\hat{x} + m_0$$

Embodiment 2-2

In general, the correlation between feature blocks is greater when the feature block is smaller than when it is large, so dividing it into smaller feature blocks makes it possible to perform reduction transform of smaller dimensions. However, as the feature block is divided into smaller pieces during encoding, the amount of additional information that needs to be signaled increases.

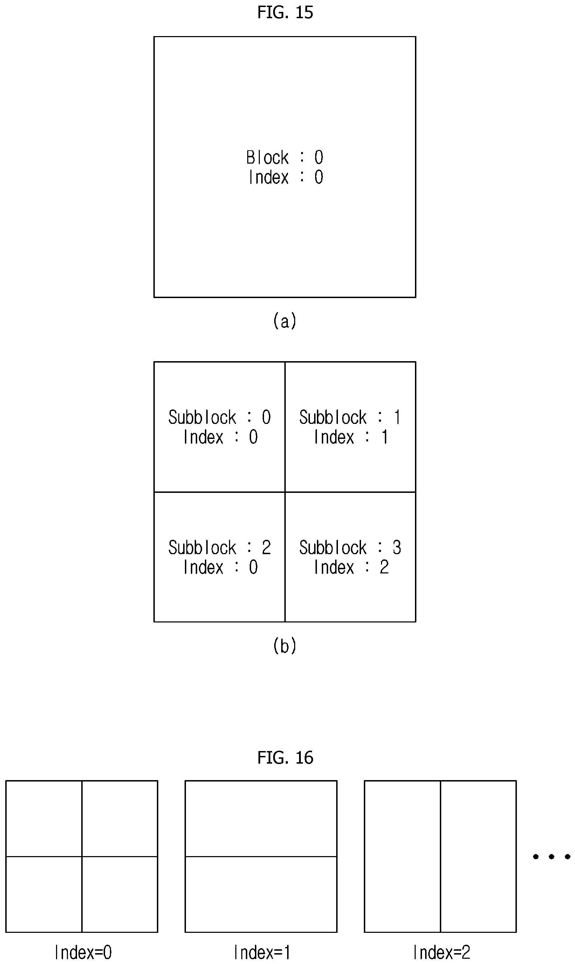

An example to explain that the amount of additional information that needs to be signaled may increase as the feature block is divided into smaller pieces is shown in FIG. 15.

FIG. 15(a) is an example of performing dimension reduction transform by regarding feature data as one feature block with a size of NxN, and FIG. 15(b) shows an example of dividing feature data into four feature blocks with a size of N/2xN/2 and performing dimension reduction transform. In the case of FIG. 15(a), only one index needs to be signaled, but in the case of FIG. 15(b), four indices need to be signaled.

In this way, since the amount of bits required for signaling may be greater than the reduction in the amount of bits during dimension reduction that can be achieved by dividing the feature block into small pieces, the division level of the feature block needs to be determined in consideration of a decrease in amount of bits during dimension reduction according to division of the feature and an increase in amount of bits according to an increase in additional information. Here, the division level of the feature block may mean whether to perform division of the feature block.

The feature encoding apparatus 10 may determine whether to perform division of the feature block based on whether a predetermined condition is satisfied. For example, if the predetermined condition is satisfied, division of the feature block may be performed, and if the predetermined condition is not satisfied, division of the feature block may not be performed.

Whether the predetermined condition is satisfied may be determined by Equation 3.

[Equation 3]
$$(d_0 + d_1 + d_2 + d_3) + \lambda(r_0 + r_1 + r_2 + r_3 + r') < D + \lambda R$$

Regarding Equation 3, when dimension reduction transform of index 0 is applied to feature data of an NxN feature block and reduction transform and reconstruction transform to a feature channel of $n_0$ are performed, it is assumed that the error compared to the original feature data is minimal, and it is D. In this case, the unit of error may be a value measured using a method such as average precision (AP) or mean average precision (mAP) indicating accuracy in MSE (mean squared error), PSNR (peak signal-to-noise ratio), or target machine task (object detection, object segmentation, etc.). Additionally, it is assumed that the amount of bits required to signal the feature channel of $n_0$ is R.

It is assumed that, when assigning numbers 0, 1, 2, and 3 to N/2xN/2 feature blocks, applying the dimension reduction method of index 0 to feature block #0 and feature block #2, applying the dimension reduction method of index 1 to feature block #1 and applying the dimension reduction method of index 2 to feature block #3, the error compared to the original feature data after reconstruction is maximal. Errors of feature blocks are referred to as $d_0$, $d_1$, $d_2$, and $d_3$, and the amount of bits required for signaling the feature data of the dimensionally reduced feature channel of each feature block are referred to as $r_0$, $r_1$, $r_2$, and $r_3$, respectively. In addition, the amount of additional information that needs to be signaled due to feature block division is called r'.

$\lambda$ (>0) is a parameter that determines the tradeoff between the amount of bits and error. As $\lambda$ increases, Equation 3 focuses on reducing the amount of bits, and as $\lambda$ decreases, Equation 3 focus on error reduction.

When a feature block is divided, the feature encoding apparatus 10 may regard the divided feature block as one feature block again and perform a process of determining whether to perform division based on whether a predetermined condition is satisfied. Accordingly, the feature block division process based on whether the predetermined condition is satisfied may be performed recursively. Additionally, this process may be predefined to be performed only until the divided feature block becomes a 1x1 feature block or until the size of the feature block becomes more than a certain value.

## Embodiment 3

### Embodiment 3-1

Embodiment 3 is a method of signaling a division mode applied to a feature channel or feature block.

A feature channel or feature block (hereinafter collectively referred to as a feature block) may be divided into various forms such as N/2xN/2 as well as NxN/2. The feature encoding apparatus 10 may encode and signal division mode information indicating a division mode applied to the feature block, and the feature decoding apparatus 10 may divide the feature block based on the division mode information.

The division mode information may indicate a division mode applied to a feature block among at least one candidate division mode. Depending on embodiments, the division mode information may be an index indicating one of candidate division modes.

An example of at least one candidate division mode and each index is shown in FIG. 16. In FIG. 16, Index=0 represents N/2xN/2 candidate division mode (equal division), Index=1 represents NxN/2 candidate division mode (horizontal division), and Index=2 represents N/2xN candidate division mode (vertical division).

### Embodiment 3-2

Embodiment 3-2 is a method of hierarchically signaling various information used to implement the present disclosure.

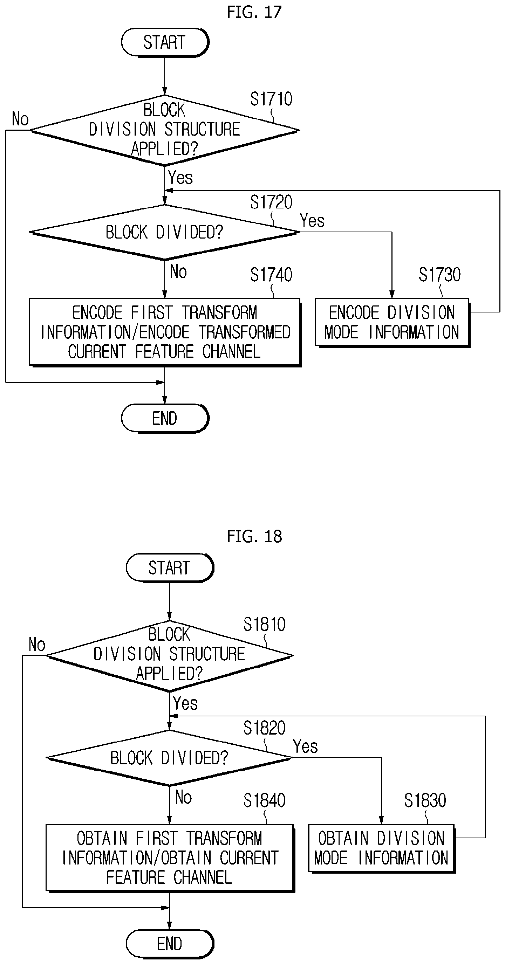

FIG. 17 is a flowchart showing a feature encoding method according to Embodiment 3-2, and FIG. 18 is a flowchart showing a feature decoding method according to Embodiment 3-2.

FIGS. 17 and 18 may be examples of a method of dividing a feature block (or sub feature block) and reducing the dimension of each divided feature block, and a method of signaling an index indicating the number of channels after dimension reduction transform. Additionally, FIGS. 17 and 18 may be an example of a method of signaling channel data after dimension reduction transform according to the number of channels after dimension reduction transform in a divided feature block (or sub feature block).

Referring to FIG. 17, the feature encoding apparatus 10 may determine whether to apply the division structure of the feature block (S1710). Upon determining that the division structure of the feature block is applied, the feature encoding apparatus 10 may determine whether to divide the feature channel into feature blocks or divide the feature block into sub feature blocks (S1720).

Upon determining that the feature channel or feature block is not divided, the feature encoding apparatus 10 may encode and signal information about division and information about transform (e.g., first transform information) (S1740). Depending on embodiments, the feature encoding apparatus 10 may encode the transformed feature channel or information about the transformed feature channel and signal it together (S1740).

In contrast, upon determining that the feature channel or feature block is divided, the feature encoding apparatus 10 may encode and signal information about the division mode applied to the division (division mode information) (S1730). Steps S1720 and S1730 may be performed recursively until division is completed. Additionally, the feature encoding apparatus 10 may encode and signal information about division and information about transform (S1740). Depending on embodiments, the feature encoding apparatus 10 may encode the transformed feature channel or information about the transformed feature channel and signal it together (S1740).

The information about division may include first information indicating whether feature blocks are present (or whether division of the feature block is applied). Additionally, the first information may include second information indicating whether feature blocks are present in a sequence including feature channels and third information indicating whether feature blocks are present in the feature channel.

Examples of the first information, second information, and third information are shown in Tables 2 and 3.

[Table 2]

| Feature_Sequence_Parameter_set( ) { |
| --- |
| ... |
| **Sequence_FeatureDataBlockDivision_flag** |
| |
| } |
| ... |
| } |

[Table 3]

| Feature_Picture_Parameter_set( ) { |
| --- |
| ... |
| If(Sequence_FeatureDataBlockDivision_flag) { |
| **Picture_FeatureDataBlockDivision_flag** |
| } |
| ... |
| } |

In Table 2, Sequence_FeatureDataBlockDivision flag may indicate whether to use a method of dividing feature data into variable feature block units in sequence units and reducing the dimension to a separate low dimension for each feature block. For example, Sequence_FeatureDataBlockDivision flag may indicate whether there is a feature block that is divided into sub feature blocks and to which individual dimension reduction transform is applied, in the sequence.

In Table 3, Picture_FeatureDataBlockDivision_flag may indicate whether to use a method of dividing feature data into variable feature blocks in picture units and reducing the dimension to a separate low dimension for each feature block. For example, Picture_FeatureDataBlockDivision_flag may indicate whether there is a feature block that is divided into lower sub feature blocks and to which individual dimension reduction transform is applied, in the feature.

As illustrated in Table 3, Picture_FeatureDataBlockDivision_flag may be included in information about division when Sequence_FeatureDataBlockDivision flag indicates that there is a feature block that is divided into sub feature blocks and to which individual dimension reduction transform is applied, in the sequence.

The information about division may include information indicating whether the feature block is divided. An example of this information is shown in Table 4.

[Table 4]

| If(Picture_FeatureDataBlockDivision_flag){ |
| --- |
| FeatureDataBlock ( ) { |
| **FeatureDataBlockDivision_flag** |
| If (FeatureDataBlockDivision_flag) { |
| **FeatureDataBlockDivision_mode_index** |
| for (i=0; i< num_blocks ; i++) { |
| FeatureDataBlock( ) |
| } |
| }else{ |
| **FeatureDataTransform_index** |
| } |

(continued)

| |
|---|
| ... |
| } |
| } |

In Table 4, FeatureDataBlockDivdsion_flag may indicate whether the feature block is divided or whether it is divided into lower sub feature blocks of the feature block. Additionally, in Table 4, FeatureDataBlockDivision_mode_index may be division mode information. num_blocks represents the number of divided feature blocks, and the division mode of each feature block may be determined by signaling FeatureDataBlockDivision_mode_index as many as the number represented by num_blocks. FeatureDataTransform_idx may be information about transform. For example, FeatureDataTransform_idx may indicate a transform mode applied to the corresponding feature block among the candidate transform modes in the transform table of Table 1.

Depending on embodiments, information about transform may further include information about the reduced number of channels in Table 1. An example of information about the reduced number of channels is shown in Table 5.

[Table 5]

| |
|---|
| If(Picture_FeatureDataBlockDivision_flag){ |
| FeatureDataBlock ( ) { |
| **FeatureDataBlockDivision_flag** |
| If (FeatureDataBlockDivision_flag) { |
| **FeatureDataBlockDivision_mode_index** |
| for (i=0; i< num_blocks ; i++) { |
| FeatureDataBlock( ) |
| } |
| }else{ |
| **FeatureDataTransform_index** |
| for (i=0; i< **num_transformed_channels**[FeatureDataTransform_index] ; i++) { |
| ChannelData() |
| } |
| } |
| |
| } |
| } |

In Table 5, num_transformed_channels[] may indicate the number of channels after reduction transform corresponding to the index in the transform table applied to each feature channel. Through signaling of num_transformed_channels[], channel data after dimension reduction transform may be encoded and signaled according to the index of the number of channels after dimension reduction transform in the feature block.

Referring to FIG. 18, the feature decoding apparatus 20 may determine whether to apply the division structure of the feature block based on information about division (S1810). Upon determining that the division structure of the feature block is applied, the feature decoding apparatus 20 may determine whether to divide the feature channel into feature blocks or divide the feature block into sub feature blocks based on information about division (S1820).

Upon determining that the feature channel or feature block is not divided, the feature decoding apparatus 20 may obtain information about division and information about transform from a bitstream (S1840). Depending on embodiments, the feature decoding apparatus 20 may further obtain the transformed feature channel or information about the transformed feature channel from the bitstream (S1840).

In contrast, upon determining that the feature channel or feature block is divided, the feature decoding apparatus 20 may obtain information about the division mode applied to the division (division mode information) from the bitstream (S1830). Steps S1820 and S1830 may be performed recursively until division is completed. Additionally, the feature decoding apparatus 20 may obtain information about division and information about transform from the bitstream (S1840). Depending on embodiments, the feature decoding apparatus 20 may further obtain the transformed feature channel or information about the transformed feature channel from the bitstream (S1840).

**Embodiment 4**

Embodiment 4 is a method of intra channel predicting a feature block using a spatial correlation with adjacent feature blocks.

Even in the case of feature data whose dimension is reduced using the correlation between feature channels, the correlation between feature channels is reduced, but spatial correlation between adjacent positions still exists within the feature channel. Therefore, intra feature channel prediction may be performed for each feature channel.

Performing and utilizing intra feature channel prediction means that a value after dimension reduction transform of a current feature block is predicted with reference to a value after dimension reduction transform of an adjacent feature block in a feature channel and only a difference between the predicted value and the value after dimension reduction transform of the current feature block is encoded into a residual signal, thereby reducing the amount of signaled bits.

Embodiment 4-1

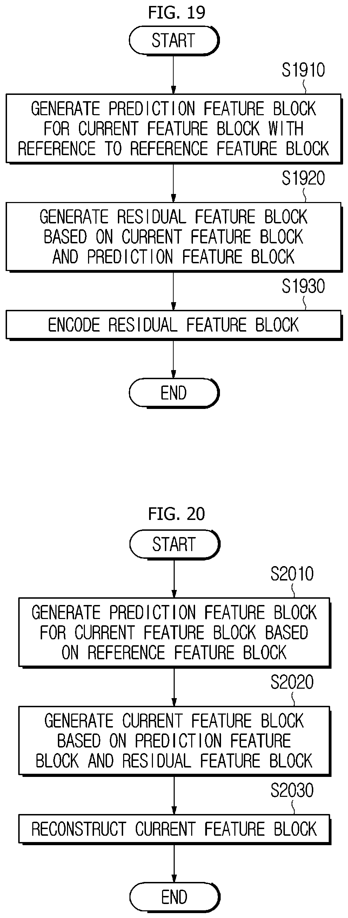

FIG. 19 is a flowchart showing a feature encoding method according to Embodiment 4-1, and FIG. 20 is a flowchart showing a feature decoding method according to Embodiment 4-2.

Referring to FIG. 19, the feature encoding apparatus 10 may generate a prediction feature block for a current feature block with reference to a reference feature block (S1910). The reference feature block may be a block that is present within the same feature channel as the current feature block and is spatially adjacent to the current feature block. The prediction feature block may be generated by predicting a value after dimension reduction transform of the current feature block with reference to a value after dimension reduction transform of the reference feature block.

The feature encoding apparatus 10 may generate a residual feature block based on the current feature block and the prediction feature block (S1920). The residual feature block may correspond to a difference between the prediction feature block and the current feature block. The feature encoding apparatus 10 may encode the residual feature block (S1930) and signal a residual signal.

Referring to FIG. 20, the feature decoding apparatus 20 may obtain a residual signal from a bitstream and obtain a reference feature block based on the residual signal.

Additionally, the feature decoding apparatus 20 may generate a prediction feature block for a current feature block based on the reference feature block (S2010). The prediction feature block may be generated by predicting a value after dimension reduction transform of the current feature block with reference to a value after dimension reduction transform of the reference feature block.

The feature decoding apparatus 20 may generate the current feature block based on the prediction feature block and the residual feature block (S2020). The current feature block may correspond to a sum between the prediction feature block and the residual feature block. The feature decoding apparatus 20 may reconstruct the current feature block by inversely transforming the current feature block generated in step S2020 (S2030). Inverse transform of the current feature block may be performed based on first transform information.

Embodiment 4-2

In the case of feature data whose dimensions is reduced to variable feature block units using the method of Embodiment 1, separate dimension reduction transform may be applied for each feature block.

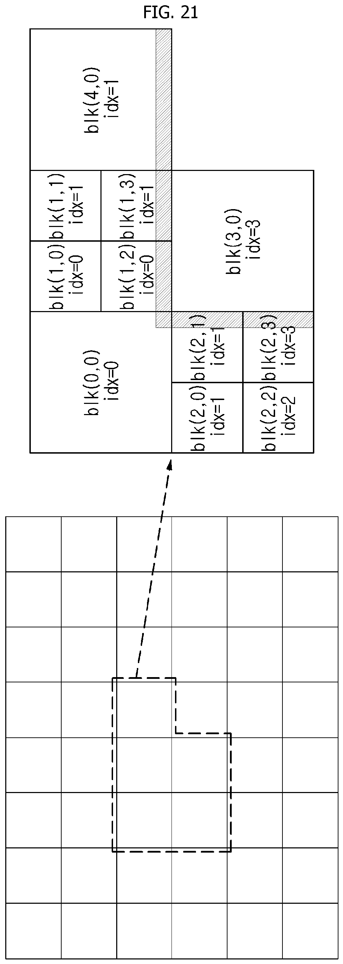

FIG. 21 and Table 6 show an example of using PCA as a dimension reduction transform method, and FIG. 21 shows feature blocks at arbitrary positions within the same feature channel.

[Table 6]

| Index | Mean | Principal Components | original number of channels | reduced number of channels |
|-------|------|----------------------|----------------------------|----------------------------|
| 0 | $m_0(1\times64)$ | $C_0(64\times16)$ | 64 | 16 |
| 1 | $m_1(1\times64)$ | $C_1(64\times8)$ | 64 | 8 |

(continued)

| Index | Mean | Principal Components | original number of channels | reduced number of channels |
|---|---|---|---|---|
| 2 | $m_2(1\times64)$ | $C_2(64\times12)$ | 64 | 12 |
| 3 | $m_3(1\times64)$ | $C_3(64\times16)$ | 64 | 16 |

blk(0, 0), blk(1, 0), ... in feature blocks are arbitrary numbers assigned to feature blocks, idx shown in each feature block indicates that the feature block was PCA transformed using the principal components and mean of the idx in Table 7. In the transform table of Table 7, $C_0(64\times16)$ corresponding to index 0 expresses the principal components of the PCA transform as a 64x16 matrix, and in the case of $m_0(1\times64)$, the mean of the PCA transform is expressed as a 1x64 matrix.

Taking the feature block blk(0, 0) as an example, since the idx of the feature block is 0, PCA may be performed on the feature block using the value of the transform table corresponding to index 0. If the 64-dimensional feature data in the feature block is $x_{0,0}$(1x64), the 16-dimensional $\hat{x}_{0,0}(1\times16)$ after dimension reduction transform may be derived by Equation 4.

[Equation 4]

$$\hat{x}_{0,0} = C_0(x_{0,0} - m_0)$$

In the case of the feature block blk(3, 0), since the idx of the feature block is 3, PCA may be performed on the feature block using the value of the transform table corresponding to index 3. If the 64-dimensional feature data in the feature block is $x_{3,0}(1\times64)$, the 16-dimensional $\hat{x}_{3,0}(1\times16)$ after dimension reduction transform may be derived by Equation 5.

[Equation 5]

$$\hat{x}_{3,0} = C_3\left(x_{3,0} - m_3\right)$$

To derive a residual signal corresponding to the feature block blk(3, 0), intra channel prediction may be performed using the decoded value in a neighboring feature block located adjacent to the feature block.

Values at positions marked in gray in the neighboring feature blocks blk(2,3), blk(2,1), blk(0,0), blk(1,2), blk(1,3), and blk(4,0) in FIG. 21 may be examples of decoded values. It is assumed that the value after dimension reduction transform of the current feature block blk(3, 0) is predicted using the value after dimension reduction transform of the gray part in the neighboring feature block blk(0, 0). In this case, $\hat{x}_{0,0}(1\times16)$, which is the value after dimension reduction transform of the neighboring feature block blk(0, 0), and $\hat{x}_{3,0}(1\times16)$, which is the value after dimension reduction transform of the current feature block blk(3, 0), has been dimension-reduction-transformed through different transform methods, so they may be values in the same vector space before dimension reduction transform, but may correspond to a value in a different vector space after dimension reduction transform. Therefore, even if there is a spatial correlation between adjacent feature blocks before dimension reduction transform, $\hat{x}_{3,0}(1\times16)$ cannot be directly predicted from $\hat{x}_{0,0}(1\times16)$.

Embodiment 4-2 proposes a method of transforming a reference feature block and a current feature block into the same vector space using inverse transform of a feature block to be referenced (reference feature block) and dimension reduction transform of a feature block to be predicted (current feature block) when different dimension reduction transform methods are applied between adjacent feature blocks.

Describing Embodiment 4-2 with reference to FIG. 21, if the value $\hat{x}_{3,0}$ in the current feature block blk(3, 0) is predicted using the value $\hat{x}_{0,0}$ in the adjacent neighboring feature block blk(0, 0), $\hat{x}_{0,0}'$ may be derived using inverse transform of dimension reduction transform of index 0 and dimension reduction transform of index 3 through Equation 6. Since $\hat{x}_{0,0}'$ is present in the same vector space as $\hat{x}_{3,0}$, the value of $\hat{x}_{3,0}$ may be predicted from $\hat{x}_{0,0}'$,

[Equation 6]

$$\hat{x}_{0,0}{}' = C_3\big(C_0^{-1}\big(\hat{x}_{0,0} + m_0\big) - m_3\big)$$

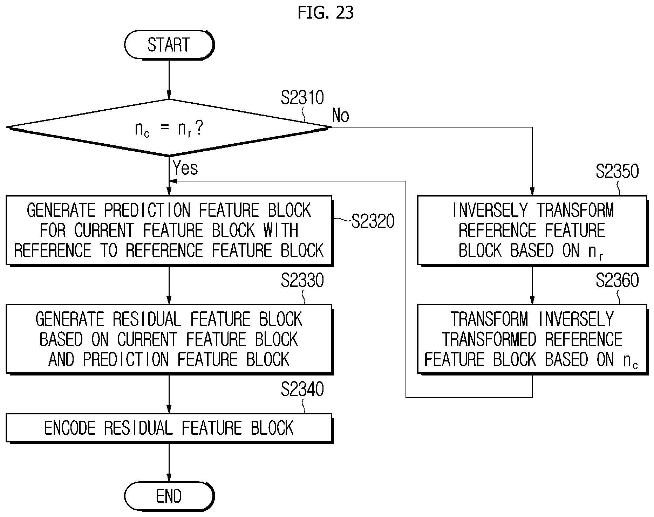

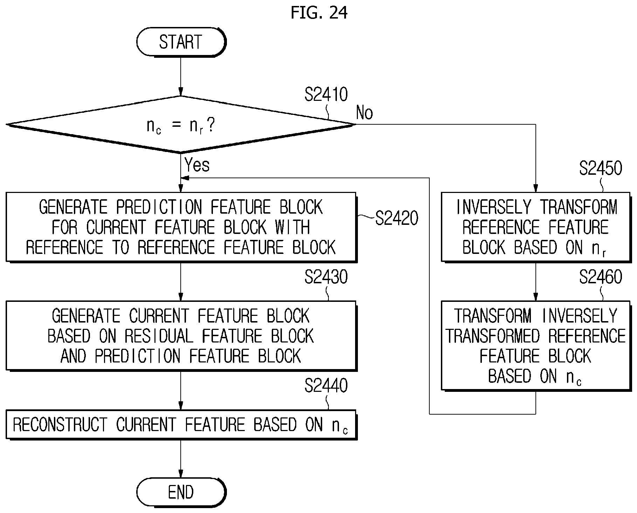

FIG. 23 is a flowchart showing a feature encoding method according to Embodiment 4-2, and FIG. 24 is a flowchart showing a feature decoding method according to Embodiment 4-2.

Referring to FIG. 23, the feature encoding apparatus 10 may determine whether first transform information $n_c$ and second transform information $n_r$ are the same (S2310). The first transform information may correspond to information about transform of a current feature block, and the second transform information may correspond to information about transform of a neighboring feature block (reference feature block). The second transform information may indicate a transform mode applied to the reference feature block among at least one candidate transform mode applicable to the reference feature block.

When the first transform information and the second transform information are the same, the feature encoding apparatus 10 may perform processes for generating and encoding a residual feature block without performing a transform process for a vector space. Specifically, the feature encoding apparatus 10 may generate a prediction feature block for a current feature block with reference to the reference feature block (S2320), generate a residual feature block based on the current feature block and the prediction feature block (S2330), and encode the residual feature block (S2340).

In contrast, when the first transform information and the second transform information are different from each other, the feature encoding apparatus 10 may perform a transform process for the vector space. Specifically, the feature encoding apparatus 10 inversely transforms the reference feature block based on the second transform information (S2350) and transforms the inversely transformed reference feature block based on the first transform information (S2360), thereby transforming the reference feature block into the same vector space as the current feature block. Thereafter, the feature encoding apparatus 10 may generate a prediction feature block for the current feature block with reference to the reference feature block (S2320), generate a residual feature block based on the current feature block and the prediction feature block (S2330), and encode the residual feature block (S2340).

Referring to FIG. 24, the feature decoding apparatus 20 may determine whether the first transform information $n_c$ and the second transform information $n_r$ are the same (S2410). The first transform information may correspond to information about the transform of the current feature block, and the second transform information may correspond to information about the transform of the reference feature block. The second transform information may indicate a transform mode applied to the reference feature block among at least one candidate transform mode applicable to the reference feature block.

When the first transform information and the second transform information are the same, the feature decoding apparatus 20 may perform processes for generating and reconstructing the current feature block without performing a transform process for the vector space. Specifically, the feature decoding apparatus 20 may generate a prediction feature block for the current feature block with reference to the reference feature block (S2420), generate the current feature block based on the residual feature block and the prediction feature block (S2430), and reconstruct the current feature block based on the first transform information (S2440).

In contrast, when the first transform information and the second transform information are different from each other, the feature decoding apparatus 20 may perform a transform process for the vector space. Specifically, the feature decoding apparatus 20 inversely transforms the reference feature block based on the second transform information (S2450) and transforms the inversely transformed reference feature block based on the first transform information (S2460), thereby transforming the reference feature block into the same vector space as the current feature block. Thereafter, the feature decoding apparatus 20 may generate a prediction feature block for the current feature block with reference to the reference feature block (S2420), generate the current feature block based on the residual feature block and the prediction feature block (S2430), and reconstruct the current feature block based on the first transform information (S2440).

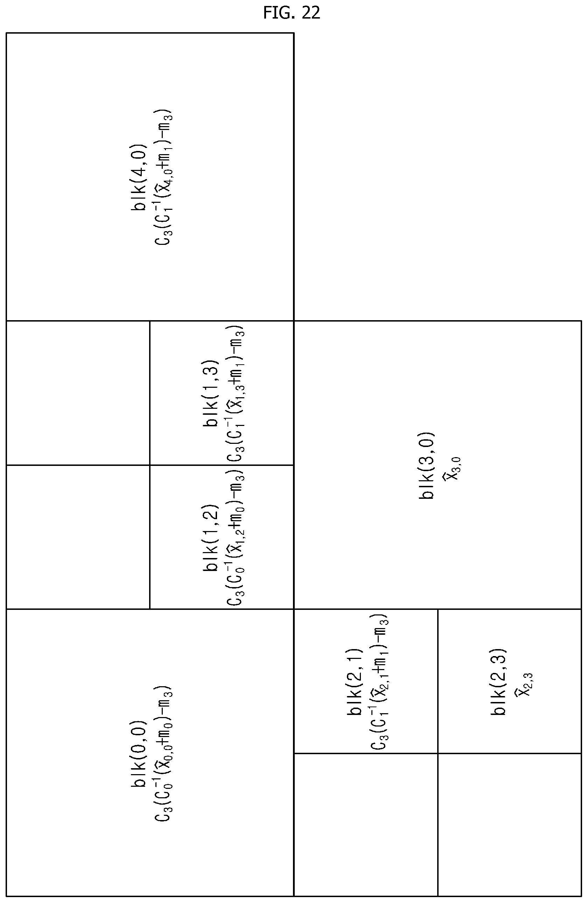

An example for Embodiment 4-2 is shown in FIG. 22. FIG. 22 shows as an example whether intra channel prediction should be performed after applying any transform to neighboring feature blocks when obtaining the residual signal of blk(3, 0) or performing decoding using it in the example of FIG. 21.

When values after dimension reduction transform of the neighboring feature blocks blk(1,2), blk(1,3), blk(2,1), and blk(4,0) are moved to the vector space after the same dimension reduction transform as blk(3,0) using the equation shown in the corresponding feature blocks, they may be used for intra channel prediction for blk(3,0). Here, in the case of the feature block blk(2, 3), $\hat{x}_{2,3}$ is written without change. This indicates that the value after dimension reduction transform of blk(2,3) may be used for intra channel prediction without a separate vector space transform process because the same dimension reduction transform method as the current feature block blk(3,0) was applied.

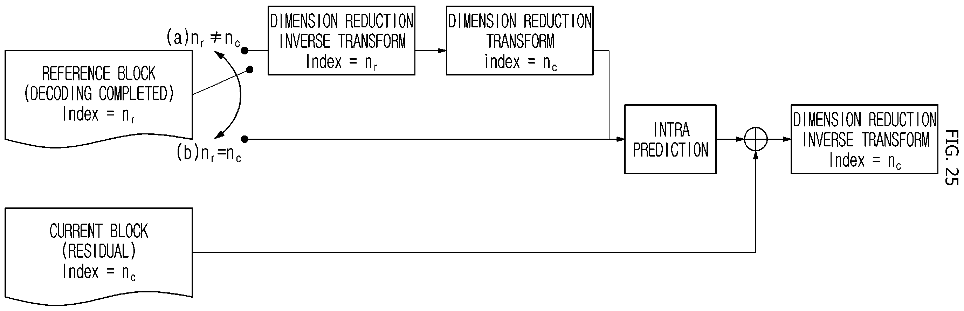

FIG. 25 is a diagram illustrating an example of data flow in the feature decoding apparatus 20 when Embodiment 4-2 is applied. In FIG. 25, (a) shows the data flow when the dimension reduction transform $n_r$ of the reference feature block is different from the dimension reduction transform $n_c$ of the current feature block, and (b) shows the data flow when the dimension reduction transform $n_r$ of the reference feature block is the same as the dimension reduction transform $n_c$ of the current feature block.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Embodiments described in the present disclosure may be implemented and performed on a processor, microprocessor, controller, or chip. For example, the functional units shown in each drawing may be implemented and performed on a computer, processor, microprocessor, controller, or chip. In this case, information for implementation (e.g., information on instructions) or algorithm may be stored in a digital storage medium.

In addition, the decoder (decoding apparatus) and the encoder (encoding apparatus), to which the embodiment(s) of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, an argument reality (AR) device, a video telephony video device, a transportation terminal (e.g., vehicle (including autonomous vehicle) terminal, robot terminal, airplane terminal, ship terminal, etc.) and a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

Additionally, a processing method to which the embodiment(s) of the present disclosure is applied may be produced in the form of a program executed by a computer and stored in a computer-readable recording medium. Multimedia data having a data structure according to the embodiment(s) of this document may also be stored in a computer-readable recording medium. Computer-readable recording media include all types of storage devices and distributed storage devices that store computer-readable data. Computer-readable recording media include, for example, Blu-ray Disc (BD), Universal Serial Bus (USB), ROM, PROM, EPROM, EEPROM, RAM, CD-ROM, magnetic tape, floppy disk, and optical data storage device. Additionally, computer-readable recording media include media implemented in the form of carrier waves (e.g., transmission via the Internet). Additionally, the bitstream generated by the encoding method may be stored in a computer-readable recording medium or transmitted through a wired or wireless communication network.

Additionally, the embodiment(s) of the present disclosure may be implemented as a computer program product by program code, and the program code may be executed on a computer by the embodiment(s) of the present disclosure. The program code may be stored on a carrier readable by a computer.

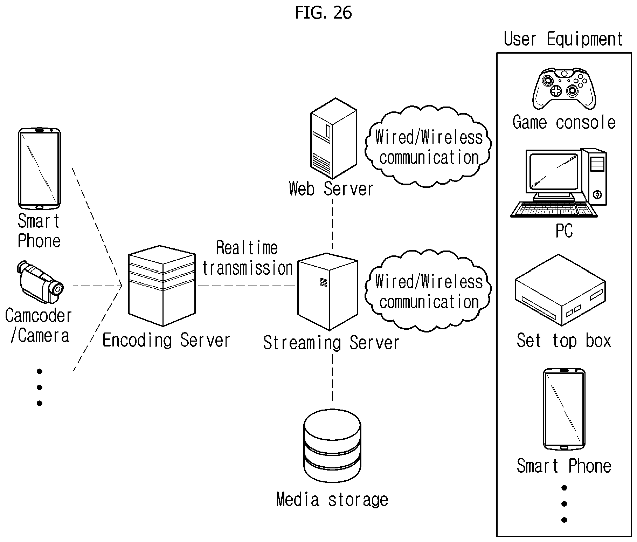

FIG. 26 is a view illustrating an example of a content streaming system to which embodiments of the present disclosure are applicable.

Referring to FIG. 26, the content streaming system, to which the embodiment of the present disclosure is applied, may largely include an encoding server, a streaming server, a web server, a media storage, a user device, and a multimedia input device.

The encoding server compresses contents input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the contents streaming system may include a separate control server. In this case, the control server serves to control a command/response between devices in the contents streaming system.

The streaming server may receive contents from a media storage and/or an encoding server. For example, when the contents are received from the encoding server, the contents may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the contents streaming system may be operated as a distributed server, in which case data received from each server may be distributed.

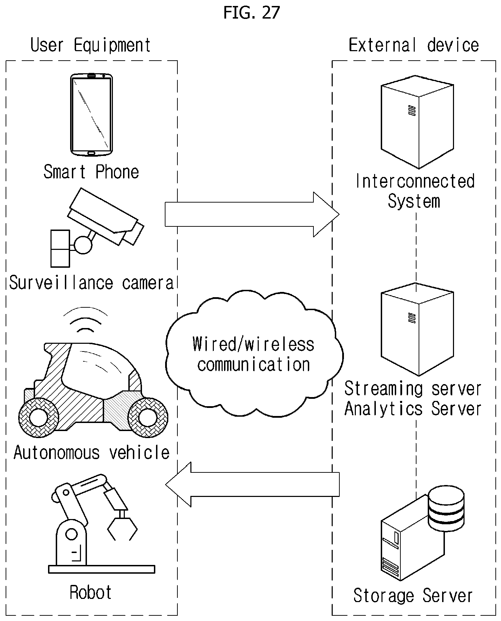

FIG. 27 is a diagram illustrating another example of a content streaming system to which embodiments of the present disclosure are applicable.

Referring to FIG. 27, in an embodiment such as VCM, a task may be performed in a user terminal or a task may be performed in an external device (e.g., streaming server, analysis server, etc.) according to the performance of the device, the user's request, the characteristics of the task to be performed, etc. In this way, in order to transmit information necessary to perform a task to an external device, the user terminal may generate a bitstream including information necessary to perform the task (e.g., information such as task, neural network and/or usage) directly or through an encoding server.

In an embodiment, the analysis server may perform a task requested by the user terminal after decoding the encoded information received from the user terminal (or from the encoding server). At this time, the analysis server may transmit the result obtained through the task performance back to the user terminal or may transmit it to another linked service server (e.g., web server). For example, the analysis server may transmit a result obtained by performing a task of determining a fire to a fire-related server. In this case, the analysis server may include a separate control server. In this case, the control server may serve to control a command/response between each device associated with the analysis server and the server. In addition, the analysis server may request desired information from a web server based on a task to be performed by the user device and the task information that may be performed. When the analysis server requests a desired service from the web server, the web server transmits it to the analysis server, and the analysis server may transmit data to the user terminal. In this case, the control server of the content streaming system may serve to control a command/response between devices in the streaming system.

**Industrial Applicability**

The embodiments of the present disclosure may be used to encode or decode a feature/feature map.

**Claims**

1. A feature decoding method performed by a feature decoding apparatus, the feature decoding method comprising:

   dividing a current feature channel into feature blocks based on information for division of the current feature channel; and
   reconstructing a current feature block based on first transform information which is information for transform of the current feature block among the feature blocks.

2. The feature decoding method of claim 1, wherein the first transform information specifies a transform mode applied to the current feature block among at least one candidate transform mode.

3. The feature decoding method of claim 1, further comprising determining whether the current feature channel is divided into the feature blocks, based on first information specifying whether the feature blocks are present, wherein the current feature channel is divided into the feature blocks based on the first information specifying that the feature blocks are present in the current feature channel.

4. The feature decoding method of claim 3, wherein the first information comprises second information indicating whether the feature blocks are present in a sequence specifying the current feature channel and third information specifying whether the feature blocks are present in the current feature channel.

**5.** The feature decoding method of claim 4, wherein the third information is included in the first information based on the second information specifying that the feature blocks are present in the sequence.

**6.** The feature decoding method of claim 1, wherein the information for division of the current feature channel comprises division mode information specifying a division mode applied to the current feature channel among at least one candidate division mode.

**7.** The feature decoding method of claim 1, wherein the reconstructing comprises:

generating a prediction feature block for the current feature block, based on at least one reference feature block located in the vicinity of the current feature block;
generating the current feature block based on a residual feature block for the current feature block and the prediction feature block; and
reconstructing the current feature block based on the first transform information.

**8.** The feature decoding method of claim 1,

wherein the current feature block is reconstructed based on the first transform information and the second transform information, and
wherein the second transform information is information for transform of at least one reference feature block located in the vicinity of the current feature block.

**9.** The feature decoding method of claim 8, wherein the second transform information specifies a transform mode applied to the reference feature block among at least one candidate transform mode.

**10.** The feature decoding method of claim 8,

wherein the reference feature block is inversely transformed based on the second transform information, and
wherein the inversely transformed reference feature block is transformed based on the first transform information.

**11.** The feature decoding method of claim 10,

wherein the current feature block is predicted based on the transformed reference feature block, and
wherein the current feature block is reconstructed based on a residual feature block for the current feature block and the predicted current feature block.

**12.** A feature encoding method performed by a feature encoding apparatus, the feature encoding method comprising:

dividing a current feature channel into feature blocks;
transforming a current feature block among the feature blocks; and
encoding first transform information, which is information for transform of the current feature block, the transformed current feature block and information for division of the current feature block.

**13.** A computer-readable recording medium storing a bitstream generated by the feature encoding method of claim 12.

**14.** A method of transmitting a bitstream generated by a feature encoding method, the feature encoding method comprising:

dividing a current feature channel into feature blocks;
transforming a current feature block among the feature blocks; and
encoding first transform information, which is information for transform of the current feature block, the transformed current feature block and information for division of the current feature block.

FIG. 1

FIG. 2

FIG. 3

FIG. 4

## FIG. 5

```
         ( START )
             │
             ▼                    S510
┌──────────────────────────────┐
│          PREDICTION          │
└──────────────────────────────┘
             │
             ▼                    S520
┌──────────────────────────────┐
│      RESIDUAL PROCESSING      │
└──────────────────────────────┘
             │
             ▼                    S530
┌──────────────────────────────┐
│   ENCODE FEATURE/FEATURE MAP  │
│ INFORMATION INCLUDING PREDICTION │
│ INFORMATION AND RESIDUAL INFORMATION │
└──────────────────────────────┘
             │
             ▼
          (  END  )
```

## FIG. 6

```
         ( START )
             │
             ▼                    S610
┌──────────────────────────────┐
│  ACQUIRE FEATURE/FEATURE MAP  │
│  INFORMATION FROM BITSTREAM   │
└──────────────────────────────┘
             │
             ▼                    S620
┌──────────────────────────────┐
│          PREDICTION          │
└──────────────────────────────┘
             │
             ▼                    S630
┌──────────────────────────────┐
│      RESIDUAL PROCESSING      │
└──────────────────────────────┘
             │
             ▼                    S640
┌──────────────────────────────┐
│ FEATURE/FEATURE MAP RECONSTRUCTION │
└──────────────────────────────┘
             │
             ▼                    S650
┌──────────────────────────────┐
│   IN-LOOP FILTERING (OPTIONAL) │
└──────────────────────────────┘
             │
             ▼
          (  END  )
```

## FIG. 7

710 720 730 740

Image/Video → Feature Extraction Network → Encoding Apparatus → Decoding Apparatus → Task Network

Extracted feature map    Bitstream    Reconstructed feature map

## FIG. 8

710

W

H

C

Image/Video

FEATURE EXTRACTION NETWORK

W'

H'

$C_n$

$C'$

$C_1$

$C_0$

Feature set

## FIG. 9

Feature(channel)

710

Input Source Image/Video

Feature Extraction Network

Feature set

FIG. 10

COCO 2017 dataset
(Image size : 640x480x3)

Data size(bits) : 640x480x3x8 = 7,372,800

Cityscape dataset
(Image size : 2048x1024x3)

Data size(bits) : 2048x1024x3x8 = 50,331,648

(a)

P5
34x25x256x32
(bits)
64x32x256x32
(bits)

P4
68x50x256x32
(bits)
128x64x256x32
(bits)

P3
136x100x256x32
(bits)
256x128x256x32
(bits)

P2
272x200x256x32
(bits)
512x256x256x32
(bits)

Total data size(bits)
=18,483,200 x 32
=591,462,400

Total data size(bits)
=44,564,480 x 32
=1,426,063,360

(b)

COCO 2017 dataset
(Image size : 640x480x3)

Cityscape dataset
(Image size : 2048x1024x3)

## FIG. 11

START

S1110

DIVIDE CURRENT FEATURE
CHANNEL INTO FEATURE BLOCKS

S1120

TRANSFORM CURRENT FEATURE BLOCK

S1130

ENCODE INFORMATION FOR TRANSFORM
OF CURRENT FEATURE BLOCK,
TRANSFORMED CURRENT FEATURE BLOCK
AND INFORMATION FOR DIVISION

END

## FIG. 12

START

S1210

OBTAIN INFORMATION FOR TRANSFORM
OF CURRENT FEATURE BLOCK,
CURRENT FEATURE BLOCK AND
INFORMATION FOR DIVISION

S1220

DIVIDE CURRENT FEATURE CHANNEL
INTO FEATURE BLOCKS

S1230

RECONSTRUCT CURRENT FEATURE BLOCK

END

FIG. 13

N channels

(a)

n channels(n<N)

(b)

N channels

(c)

## FIG. 14

N CHANNELS

(a)

n CHANNELS(n<N)

(b)

N CHANNELS

(c)

FIG. 15

Block : 0
Index : 0

(a)

| Subblock : 0 Index : 0 | Subblock : 1 Index : 1 |
| Subblock : 2 Index : 0 | Subblock : 3 Index : 2 |

(b)

FIG. 16

Index=0

Index=1

Index=2

• • •

FIG. 17

START

S1710

No ← BLOCK DIVISION STRUCTURE APPLIED?

Yes

S1720

BLOCK DIVIDED? — Yes →

No

S1740

ENCODE FIRST TRANSFORM INFORMATION/ENCODE TRANSFORMED CURRENT FEATURE CHANNEL

S1730

ENCODE DIVISION MODE INFORMATION

END

FIG. 18

START

S1810

No ← BLOCK DIVISION STRUCTURE APPLIED?

Yes

S1820

BLOCK DIVIDED? — Yes →

No

S1840

OBTAIN FIRST TRANSFORM INFORMATION/OBTAIN CURRENT FEATURE CHANNEL

S1830

OBTAIN DIVISION MODE INFORMATION

END

## FIG. 19

START

S1910

GENERATE PREDICTION FEATURE BLOCK
FOR CURRENT FEATURE BLOCK WITH
REFERENCE TO REFERENCE FEATURE BLOCK

S1920

GENERATE RESIDUAL FEATURE BLOCK
BASED ON CURRENT FEATURE BLOCK
AND PREDICTION FEATURE BLOCK

S1930

ENCODE RESIDUAL FEATURE BLOCK

END

## FIG. 20

START

S2010

GENERATE PREDICTION FEATURE BLOCK
FOR CURRENT FEATURE BLOCK BASED
ON REFERENCE FEATURE BLOCK

S2020

GENERATE CURRENT FEATURE BLOCK
BASED ON PREDICTION FEATURE
BLOCK AND RESIDUAL FEATURE BLOCK

S2030

RECONSTRUCT CURRENT FEATURE BLOCK

END

FIG. 21

FIG. 22

blk(4,0)
$$C_3(C_1^{-1}(\hat{x}_{4,0}+m_1)-m_3)$$

blk(1,3)
$$C_3(C_1^{-1}(\hat{x}_{1,3}+m_1)-m_3)$$

blk(1,2)
$$C_3(C_0^{-1}(\hat{x}_{1,2}+m_0)-m_3)$$

blk(3,0)
$$\hat{x}_{3,0}$$

blk(0,0)
$$C_3(C_0^{-1}(\hat{x}_{0,0}+m_0)-m_3)$$

blk(2,1)
$$C_3(C_1^{-1}(\hat{x}_{2,1}+m_1)-m_3)$$

blk(2,3)
$$\hat{x}_{2,3}$$

FIG. 23

```
                        ┌─────────┐
                        │  START  │
                        └────┬────┘
                             │
                             ▼                    S2310
              ╱─────────────────────────────╲        No
             ╱                                ╲──────────────────┐
             ╲         n_c = n_r ?            ╱                   │
              ╲─────────────────────────────╱                    │
                             │ Yes                               │
                             ▼                                   │
        ┌──────────────────────────────────┐ ~S2320             ▼
        │  GENERATE PREDICTION FEATURE BLOCK │         ┌────────────────────┐ S2350
        │   FOR CURRENT FEATURE BLOCK WITH   │◄───┐    │ INVERSELY TRANSFORM│
        │ REFERENCE TO REFERENCE FEATURE BLOCK│   │    │  REFERENCE FEATURE │
        └────────────────┬──────────────────┘   │    │  BLOCK BASED ON n_r │
                         │              S2330    │    └──────────┬─────────┘
                         ▼                       │               │    S2360
        ┌──────────────────────────────────┐   │    ┌──────────▼─────────┐
        │  GENERATE RESIDUAL FEATURE BLOCK  │   │    │  TRANSFORM INVERSELY│
        │  BASED ON CURRENT FEATURE BLOCK   │   │    │ TRANSFORMED REFERENCE│
        │   AND PREDICTION FEATURE BLOCK    │   │    │FEATURE BLOCK BASED ON n_c│
        └────────────────┬──────────────────┘   │    └──────────┬─────────┘
                         │              S2340    │               │
                         ▼                       └───────────────┘
        ┌──────────────────────────────────┐
        │   ENCODE RESIDUAL FEATURE BLOCK   │
        └────────────────┬──────────────────┘
                         │
                         ▼
                    ┌─────────┐
                    │   END   │
                    └─────────┘
```

FIG. 24

START

$n_c = n_r$? — S2410

No

Yes

GENERATE PREDICTION FEATURE BLOCK
FOR CURRENT FEATURE BLOCK WITH
REFERENCE TO REFERENCE FEATURE BLOCK — S2420

INVERSELY TRANSFORM
REFERENCE FEATURE
BLOCK BASED ON $n_r$ — S2450

GENERATE CURRENT FEATURE BLOCK
BASED ON RESIDUAL FEATURE BLOCK
AND PREDICTION FEATURE BLOCK — S2430

TRANSFORM INVERSELY
TRANSFORMED REFERENCE
FEATURE BLOCK
BASED ON $n_c$ — S2460

RECONSTRUCT CURRENT FEATURE BASED ON $n_c$ — S2440

END

FIG. 25

FIG. 26

FIG. 27

User Equipment

Smart Phone

Surveillance camera

Autonomous vehicle

Robot

Wired/wireless communication

External device

Interconnected System

Streaming server Analytics Server

Storage Server

<div align="center">

### INTERNATIONAL SEARCH REPORT

</div>

| | International application No. |
|---|---|
| | **PCT/KR2022/017957** |

| | |
|---|---|
| **A.** | **CLASSIFICATION OF SUBJECT MATTER** |
| | **H04N 19/20**(2014.01)i; **H04N 19/119**(2014.01)i; **H04N 19/176**(2014.01)i; **H04N 19/60**(2014.01)i; **H04N 19/184**(2014.01)i; **G06N 3/08**(2006.01)i |
| | According to International Patent Classification (IPC) or to both national classification and IPC |

| | |
|---|---|
| **B.** | **FIELDS SEARCHED** |
| Minimum documentation searched (classification system followed by classification symbols) | |
| | H04N 19/20(2014.01); G06N 3/08(2006.01); G06T 9/00(2006.01); H04N 19/105(2014.01); H04N 19/129(2014.01); H04N 19/146(2014.01); H04N 19/184(2014.01); H04N 19/70(2014.01); H04N 19/85(2014.01) |
| Documentation searched other than minimum documentation to the extent that such documents are included in the fields searched | |
| | Korean utility models and applications for utility models: IPC as above |
| | Japanese utility models and applications for utility models: IPC as above |
| Electronic data base consulted during the international search (name of data base and, where practicable, search terms used) | |
| | eKOMPASS (KIPO internal) & keywords: 피처(feature), 복호화(decoding), 채널(channel), 분할(partition), 변환(transform), 모드(mode), 시퀀스(sequence) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | WO 2021-201642 A1 (LG ELECTRONICS INC.) 07 October 2021 (2021-10-07)<br>See paragraphs [0114], [0130], [0169]-[0173], [0213], [0281], [0304]-[0305], [0454], [0462], [0471], [0540], [0586]-[0587], [0624] and [0638]; and figures 1-5, 11, 17, 30-31, 40 and 42. | 1-7,12-14 |
| Y | | 8-11 |
| Y | KR 10-2021-0114915 A (ELECTRONICS AND TELECOMMUNICATIONS RESEARCH INSTITUTE) 24 September 2021 (2021-09-24)<br>See paragraphs [0105]-[0106]; and figure 11. | 8-11 |
| A | US 2021-0203997 A1 (HUAWEI TECHNOLOGIES CO., LTD.) 01 July 2021 (2021-07-01)<br>See claims 7-12. | 1-14 |
| A | US 2021-0314573 A1 (NOKIA TECHNOLOGIES OY) 07 October 2021 (2021-10-07)<br>See claims 21-30; and figures 5-7. | 1-14 |

☑ Further documents are listed in the continuation of Box C.     ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **15 February 2023** | **20 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2022/017957** |

### C.    DOCUMENTS CONSIDERED TO BE RELEVANT

| Category* | Citation of document, with indication, where appropriate, of the relevant passages | Relevant to claim No. |
| --- | --- | --- |
| A | GAO, Wen et al. Recent Standard Development Activities on Video Coding for Machines. arXiv:2105.12653v1. pp. 1-13, May 2021. See pages 8 and 11; and figures 2 and 8. | 1-14 |

Form PCT/ISA/210 (second sheet) (July 2022)

**INTERNATIONAL SEARCH REPORT**
Information on patent family members

| International application No. |
| --- |
| **PCT/KR2022/017957** |

| Patent document cited in search report | | | Publication date (day/month/year) | Patent family member(s) | | | Publication date (day/month/year) |
| --- | --- | --- | --- | --- | --- | --- | --- |
| WO | 2021-201642 | A1 | 07 October 2021 | KR | 10-2022-0163941 | A | 12 December 2022 |
| KR | 10-2021-0114915 | A | 24 September 2021 | KR | 10-2012-0100836 | A | 12 September 2012 |
| | | | | KR | 10-2020-0054934 | A | 20 May 2020 |
| | | | | US | 11102494 | B2 | 24 August 2021 |
| | | | | US | 2013-0329807 | A1 | 12 December 2013 |
| | | | | US | 2021-0344935 | A1 | 04 November 2021 |
| US | 2021-0203997 | A1 | 01 July 2021 | CN | 112673625 | A | 16 April 2021 |
| | | | | EP | 3834409 | A1 | 16 June 2021 |
| | | | | WO | 2020-055279 | A1 | 19 March 2020 |
| US | 2021-0314573 | A1 | 07 October 2021 | EP | 4133740 | A1 | 15 February 2023 |
| | | | | US | 11375204 | B2 | 28 June 2022 |
| | | | | WO | 2021-205067 | A1 | 14 October 2021 |

Form PCT/ISA/210 (patent family annex) (July 2022)